# EUROPEAN PATENT APPLICATION

(11) **EP 4 403 520 A1**
(43) Date of publication of application: **24.07.2024**
(21) Application number: 22867370.3
(22) Date of filing: 07.09.2022
(51) Int. Cl.: C01G 45/12, C08K 3/22, C08L 101/00, G02B 5/22, G02B 5/26

(54) **MANGANESE OXIDE, MANGANESE OXIDE PARTICLES, NEAR-INFRARED TRANSMISSION MATERIAL, AND NEAR-INFRARED TRANSMISSION FILM**

(30) Priority: 13.09.2021 JP 2021148343
(71) Applicant: Mitsui Mining & Smelting Co., Ltd, Shinagawa-ku Tokyo 141-8584 (JP)
(72) Inventor: YONEDA, Yoshihiro, Omuta-shi, Fukuoka 836-0003 (JP); TANAKA, Akinobu, Omuta-shi, Fukuoka 836-0003 (JP)
(74) Representative: Novagraaf Technologies
(86) International application number: PCT/JP2022/033510
(87) International publication number: WO 2023/038048

(57) **Abstract**

Provided is a manganese oxide represented by A-Mn-O as constituent elements, in which the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

## Description

### Technical Field

The present invention relates to a manganese oxide, manganese oxide particles, a near-infrared transmission material, and a near-infrared transmission film.

### Background Art

In recent years, infrared sensors and infrared cameras have been effectively used in a wide range of technical fields. For example, in the field of information communication terminals such as smartphones, face authentication and the like have been introduced from the viewpoint of security enhancement, and infrared sensors and infrared cameras have been used in order to detect an accurate face shape. Further, in the field of automobiles, infrared sensors and infrared cameras have been attached to vehicles in order to detect the situation around the vehicle.

In order to accurately detect the shape of the face and the situation around the vehicle, a high-precision infrared sensor and a near-infrared camera are required, and in order to realize them, filters and coating materials that transmit only near-infrared rays and do not transmit other wavelengths, for example, visible light rays, are required.

As a material for such a filter or a coating material, in the infrared transmitting product disclosed in PTL 1, a composition in which titanium oxide or zinc oxide is blended in a transparent resin is used as a coating material. In addition, PTLs 2 and 3 disclose a configuration in which a composition in which an azo-based dye pigment is blended in a transparent resin is used as a coating film that transmits near-infrared rays.

### Citation List

### Patent Literature

PTL 1: JP 2021-56346 A
PTL 2: JP 6899061 B
PTL 3: JP 2021-56345 A

### Summary of Invention

### Technical Problem

However, attempts to increase the transmittance in the near-infrared region of the coating material disclosed in PTL 1, which is formed from a composition in which titanium oxide or zinc oxide is blended in a transparent resin, have led to concerns that the transmittance in the visible light region will also increase, and that titanium oxide or zinc oxide will deteriorate the resin in which they are blended because they have photocatalytic capability. Furthermore, organic dye pigments such as azo-based dye pigments are generally said to be weak against ultraviolet rays, and there has been a concern in terms of weather resistance and durability.

In view of the above problems, an object of the invention is to provide a manganese oxide or manganese oxide particles having a low transmittance in the visible light region and a high transmittance in the near-infrared region, a near-infrared transmission material, and a near-infrared transmission film. Solution to Problem

The manganese oxide of the invention, made to solve the above problems, is characterized by a manganese oxide represented by A-Mn-O as constituent elements, in which the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

The manganese oxide of the invention is not limited to a powder form, but may be a liquid form dispersed in a dispersion medium.

The constituent elements of the manganese oxide of the invention are represented by A-Mn-O. To be specific, the constituent element A represents one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I. In addition, the constituent element Mn represents a manganese element which is a transition metal, can have a valence of 2 to 7 depending on the bound constituent element A, and is particularly stable in a state of +2, +3, +4, +6, or +7.

Here, when the molar ratio A/Mn of the constituent element A to the constituent element Mn is 0.001 to 2.0, a material having a low transmittance in the visible light region and an excellent transmission capability in the near-infrared region can be obtained. Furthermore, the molar ratio A/Mn of the constituent element A to the constituent element Mn is more preferably 0.1 to 1.0, still more preferably 0.3 to 0.7, particularly preferably 0.4 to 0.6, and most preferably 0.5. Note that, when the constituent element A is a plurality of elements, "A" in the above-described molar ratio A/Mn is the sum of the molar numbers of the plurality of elements which are the constituent element A.

Further, the constituent element O represents an oxygen element, and may be an amount satisfying an electroneutral condition, and includes oxygen excess and oxygen deficiency.

The manganese oxide of the invention is characterized in that a reflectance of light at a wavelength of 550 nm and a reflectance of light at a wavelength of 700 nm of the manganese oxide are 20% or less.

Here, it is considered that the low values of the reflectances of light at a wavelength of 550 nm and a wavelength of 700 nm in the visible light region have another advantage that the capability for preventing diffuse reflection (halation) of light is excellent in the visible light region, that is, not only the visible light is not simply transmitted but also the capability for absorbing the visible light is excellent in the visible light region. In addition, the reflectances of light at a wavelength of 550 nm and a wavelength of 700 nm are more preferably 15% or less, still more preferably 12% or less, particularly preferably 10% or less, more particularly preferably 5% or less, and most preferably 0%. Further, it is more preferable that the reflectances of light at a wavelength of 550 nm, a wavelength of 600 nm, a wavelength of 650 nm, and a wavelength of 700 nm of the manganese oxide of the invention are equal to or less than the above-described upper limit value. It is still more preferable that the reflectances of light at wavelengths of 550 nm to 700 nm of the manganese oxide of the invention are equal to or less than the above-described upper limit value. The reflectances of light at a wavelength of 550 nm and a wavelength of 700 nm of the manganese oxide of the invention are typically 1 % to 10%.

The reflectance is measured using a spectrophotometer (UV-visible near-infrared spectrophotometer Model UH4150, manufactured by Hitachi High-Tech Science Corporation) to which a 60 mmϕ integrating sphere unit is attached, a sample filled with the manganese oxide according to the invention is attached, and the reflectances with respect to light at a wavelength of 550 nm and a wavelength of 700 nm are measured.

Further, the manganese oxide of the invention is characterized in that the manganese oxide has a composition formula represented by AxMnyOz, and x/y is 0.001 or more and 2.00 or less.

In a case where the coefficient x of the constituent element A and the coefficient y of the constituent element Mn in the composition formula of the manganese oxide of the invention are x/y = 0.001 or more and 2.00 or less, it is preferable from the viewpoint that the transmissivity is gradually improved from the vicinity of a wavelength of 1000 nm and high transmittance is exhibited in a long-wavelength region in the vicinity of a wavelength of 2000 nm. In addition, x/y is more preferably 0.10 or more and 1.50 or less, and still more preferably 0.40 or more and 0.60 or less. Furthermore, in a case where the constituent element A is a plurality of elements, the coefficient x of the constituent element A is the total sum of coefficients of the plurality of elements which are the constituent element A. In addition, the coefficient z of the constituent element O may be a value that neutralizes the total sum of electric charges of the constituent elements A and Mn.

Further, in the manganese oxide of the invention, when the constituent element A contains Li, the transmittance in the visible light region is low and the transmittance in the near-infrared region is high, which is preferable.

In the manganese oxide of the invention, it is preferable that the constituent element A contains Li, the composition formula of the manganese oxide is represented by AxMnyOz, and x/y is 0.001 or more and 2.00 or less, from the viewpoint that the transmissivity is gradually improved from the vicinity of a wavelength of 1000 nm and high transmittance is exhibited in a long-wavelength region in the vicinity of a wavelength of 2000 nm. In addition, x/y is more preferably 0.10 or more and 1.50 or less, and still more preferably 0.40 or more and 0.60 or less.

In addition, in a case where the manganese oxide of the invention contains Li and one or more elements selected from Mg, Ca, Al, Ti, Fe, Zn, Bi, and Y, the transmittance in the visible light region is low, and the transmittance in the near-infrared region is high, which is more preferable. Furthermore, in the manganese oxide of the invention, it is particularly preferable that the constituent element A contains Li, and Mg and/or Al, from the viewpoint that the transmittance in the near-infrared region is increased.

Furthermore, in the manganese oxide of the invention, when the constituent element A contains Y, it is preferable from the viewpoint that while suppressing transmission in the visible light region, the transmittance rises steeply from a low wavelength side in the vicinity of a wavelength of 1000 nm, which is the near-infrared region, and high transmissivity is exhibited thereafter.

Also, in the manganese oxide of the invention, the constituent element A contains Y, the composition formula of the manganese oxide is represented by AxMnyOz, it is preferable that x/y is 0.001 or more and 2.00 or less, from the viewpoint of exhibiting high transmissivity in the near-infrared region while suppressing transmission in the visible light region. In addition, x/y is more preferably 0.10 or more and 1.00 or less, and still more preferably 0.40 or more and 0.60 or less. Note that the coefficient z of the constituent element O may be a value that neutralizes the total sum of electric charges of the constituent elements A and Mn.

Moreover, in the manganese oxide of the invention, the constituent element A contains Y, and it is preferable that the intensity ratio (211)/(112) of the peak intensity derived from the (211) plane appearing at 2θ = 35.5 to 36.5° to the peak intensity derived from the (112) plane appearing at 2θ = 32.5 to 33.5° in the XRD spectrum of the manganese oxide is 2.50 or less, and it is particularly preferable that the ratio is 0.10 or more and 1.00 or less from the viewpoint of high blackness (a* (redness) and b* (yellowness) measured using CIE1976, that is, CIE1976 (L*a*b*) color space are each close to 0).

Here, in the manganese oxide containing Y in the constituent element A of the invention, the intensity ratio (211)/(112) of the peak intensity derived from the (211) plane appearing at 2θ = 35.5 to 36.5° to the peak intensity derived from the (112) plane appearing at 2θ = 32.5 to 33.5° in the XRD spectrum using CuKα rays is preferably 2.50 or less, and more preferably 0.10 or more and 1.00 or less from the viewpoint of high blackness (a* and b* are close to 0). The manganese oxide containing Y in the constituent element A is thoroughly mixed and pulverized in an agate mortar, and the mixture is classified through a sieve with an opening of 75 µm. A 0.5g portion of the powder at the center of the well mixed state in the container under the sieve is collected on a glass sample plate, and a sample filled with the glass plate so that the surface becomes smooth is subjected to powder X-ray diffraction measurement using CuKα rays according to the following powder X-ray diffraction measurement conditions to obtain an X-ray diffraction pattern. In the obtained X-ray diffraction pattern, the peak intensity at 2θ = 32.5 to 33.5° is attributed to the YMnOs (112) plane, and the peak intensity at 2θ = 35.5 to 36.5° is attributed to the Mn₃O₄ (221) plane.

### <<Powder X-ray Diffraction Measurement Conditions>>

Apparatus: MiniFlexII (manufactured by Rigaku Corporation)
Measurement range (2θ): 5 to 90°
Sampling width: 0.02°
Scanning speed: 1.0°/min
X-ray: CuKα ray
Voltage: 30 kV
Current: 15 mA
Divergence slit: 1.25°
Scatter slit: 1.25°
Receiving slit: 0.3 mm

Further, in the manganese oxide of the invention, when the constituent element A contains Y and one or more elements selected from Li, Ca, Al, Ti, Fe, Zn, and Bi, it is more preferable from the viewpoint that while suppressing transmission in the visible light region, the transmittance rises steeply from a low wavelength side in the vicinity of a wavelength of 1000 nm, which is the near-infrared region, and high transmissivity is exhibited thereafter. Furthermore, in the manganese oxide of the present invention, it is particularly preferable that the constituent element A contains Y and Zn, from the viewpoint of further increasing the transmissivity in the near-infrared region.

In addition, the manganese oxide of the invention is for a near-infrared transmission material.

As described above, the manganese oxide of the invention has a low transmittance in the visible light region and an excellent transmission capability in the near-infrared region, and thus can be used for a near-infrared transmission material.

The manganese oxide particles of the invention are characterized by manganese oxide particles represented by A-Mn-O as constituent elements, in which the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

The constituent elements of the manganese oxide particles of the invention are represented by A-Mn-O. To be specific, the constituent element A represents one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I. In addition, the constituent element Mn represents a manganese element which is a transition metal, can have a valence of 2 to 7 depending on the bound constituent element A, and is particularly stable in a state of +2, +3, +4, +6, or +7.

Further, the constituent element O represents an oxygen element, and may be an amount satisfying an electroneutral condition, and includes oxygen excess and oxygen deficiency.

Further, the manganese oxide particles of the invention are characterized in that reflectances of light at a wavelength of 550 nm and a wavelength of 700 nm of the manganese oxide particles are 20% or less.

It is preferable that the the reflectances of light at a wavelength of 550 nm and a wavelength of 700 nm of the manganese oxide particles of the invention are 20% or less, from the viewpoint that not only the visible light is not simply transmitted but also the visible light absorbing capability is excellent. The reflectances of light at a wavelength of 550 nm and a wavelength of 700 nm are more preferably 15% or less, still more preferably 12% or less, particularly preferably 10% or less, more particularly preferably 5% or less, and most preferably 0%. Further, it is more preferable that the reflectances of light, at a wavelength of 550 nm, a wavelength of 600 nm, a wavelength of 650 nm, and a wavelength of 700 nm of the manganese oxide particles of the invention, are equal to or less than the above-described upper limit value. It is still more preferable that the reflectances of light, at wavelengths of 550 nm to 700 nm of the manganese oxide particles of the invention, are equal to or less than the above-described upper limit value. Note that the reflectances of light, at a wavelength of 550 nm and a wavelength of 700 nm of the manganese oxide particles of the invention, are typically 1% to 10%.

Further, the manganese oxide particles of the invention are characterized in that an average value of a secondary particle diameter of the manganese oxide particles by SEM observation is 10 nm or more and 20 µm or less.

It is preferable that the average value of the secondary particle diameter of the manganese oxide particles according to the invention as determined by SEM observation is 10 nm or more and 20 µm or less from the viewpoint of improving the transmissivity to near-infrared rays.

In addition, the average value of the secondary particle diameter is more preferably 50 nm or more, and still more preferably 100 nm or more. On the other hand, the average value of the secondary particle diameter is more preferably 10 µm or less, and still more preferably 2 µm or less.

Here, the average value of the secondary particle diameter of the manganese oxide particles by SEM observation can be obtained by observing an SEM image using a field emission scanning electron microscope (FE-SEM) under the condition of an acceleration voltage of 1 kV. Specifically, the manganese oxide particles of the invention (optionally extracted 30 particles) are directly observed, the secondary particle diameters thereof are measured, and the arithmetic average value thereof is calculated, whereby the average value of the secondary particle diameters obtained by SEM observation is used. Note that, as the measurement magnification, an appropriate magnification may be selected in the range of 500 times to 100,000 times depending on the size of the secondary particle diameter.

Furthermore, the manganese oxide particles of the invention are characterized by having a specific surface area of 0.20 m²/g or more as measured by a BET method.

When the manganese oxide particles of the invention have a specific surface area of 0.20 m²/g or more as measured by the BET method, it is preferable from the viewpoint of improving dispersibility of the manganese oxide particles. Further, the specific surface area is more preferably 10.0 m²/g or more, and still more preferably 15.0 m²/g or more.

The specific surface area (SSA) of the manganese oxide particles of the invention can be determined by performing measurement using "Macsorb (HM model-1201)" manufactured by Mountech Co., Ltd. in accordance with "6.2 flow method, (3.5) single-point method" of JIS R 1626-1996 (Measuring methods for the specific surface area of fine ceramic powders by gas adsorption using the BET method). At this time, a mixed gas of helium as a carrier gas and nitrogen as an adsorbate gas is used. In addition, for calibration, nitrogen gas is used.

Moreover, the manganese oxide particles of the invention preferably have a particle diameter of 0.1 µm or more and 20 µm or less, more preferably 0.2 µm or more and 10 µm or less, and still more preferably 0.3 µm or more and 1 µm or less at an integrated volume fraction of 50% as determined by particle size distribution measurement using a laser diffraction/scattering method.

The evaluation of the particle size distribution of the particles is performed by a laser diffraction/scattering method in accordance with JIS Z 8825:2013 using a laser diffraction/scattering particle size distribution measuring device (manufactured by MicrotracBEL Corp.: MT3300EXII). In addition, no filtering is performed, and the sample is subjected to ultrasonic treatment at an ultrasonic power of 40 W for 3 minutes, and then measured.

Specifically, a slurry-like sample is put into a sample inlet port of a sample circulator provided in the measuring apparatus until the measuring apparatus determine that it is within a measurable range, and then ultrasonic dispersion treatment (ultrasonic output of 40 W, for 3 minutes) built in the measuring apparatus is performed, and after it is confirmed that the display is stable, measurement is performed.

Further, the manganese oxide particles of the invention are characterized by having an L* of 45 or less as measured by CIE1976.

The manganese oxide particles of the invention preferably have an L *of 45 or less, as measured by CIE1976, from the viewpoint that the appearance is more black and the transmittance in the visible light region can be reduced, more preferably have an L* of 40 or less, still more preferably have an L* of 35 or less, particularly preferably have an L* of 30 or less, and more particularly preferably have an L* of 20 or less. Note that the manganese oxide particles of the invention typically have an L* of 20 to 45 as measured by CIE1976.

Here, the value of L* measured using CIE1976, i.e., CIE1976 (L*a*b*) color space, indicates brightness. As the value of L* is closer to 100, the color is closer to white and lighter, and as the value of L* is closer to 0, the color is closer to black and darker. Specifically, the value of L* is obtained by using a color difference meter (manufactured by Konica Minolta, Inc.: CR-300) and performing the measurement in accordance with JIS Z 8722:2009.

Furthermore, the value of a* in the CIE1976 (L*a*b*) color space is preferably -5 to 20, more preferably -5 to 15, still more preferably -5 to 10, particularly preferably -5 to 5, more particularly preferably -2 to 2, and most preferably 0. As the value of a* is closer to 0, coloring is more suppressed. In addition, the value of b* in the CIE1976 (L*a*b*) color space is preferably -10 to 25, more preferably -5 to 20, still more preferably -5 to 15, particularly preferably -5 to 5, more particularly preferably -2 to 2, and most preferably 0. As the value of b* is closer to 0, coloring is more suppressed. Specifically, similarly to the value of L*, the values of a* and b* are obtained by using a color difference meter (manufactured by Konica Minolta, Inc.: CR-300) and performing the measurement in accordance with JIS Z 8722:2009.

Further, the manganese oxide particles of the invention are characterized in that the manganese oxide particle has a composition formula represented by AxMnyOz, and x/y is 0.001 or more and 2.00 or less.

In a case where the coefficient x of the constituent element A and the coefficient y of the constituent element Mn in the composition formula of the manganese oxide particle of the invention are x/y = 0.001 or more and 2.00 or less, it is preferable from the viewpoint that while suppressing transmission in the visible light region, the transmittance rises steeply from a low wavelength side in the vicinity of a wavelength of 1000 nm, which is the near-infrared region, and high transmissivity is exhibited thereafter. In addition, in a case where the constituent element A is a plurality of elements, the coefficient x of the constituent element A is the total sum of coefficients of the plurality of elements which are the constituent element A. Note that the coefficient z of the constituent element O is a value that neutralizes the total sum of electric charges of the constituent elements A and Mn.

Further, in the manganese oxide particles of the invention, when the constituent element A contains Li, the transmittance in the visible light region is low and the transmittance in the near-infrared region is high, which is preferable.

The manganese oxide particles of the invention containing lithium as the constituent element A generally have a crystal structure of a spinel type (Fd3-m) or a zigzag layered rock salt structure, but are not limited thereto. In addition, the manganese oxide particles generally contain oxygen deficiency, and a part of oxygen may be substituted with fluorine.

In the manganese oxide particles of the invention, the constituent element A contains Li, the composition formula of the manganese oxide is represented by AxMnyOz, and it is preferable that x/y is 0.001 or more and 2.00 or less, from the viewpoint that the transmissivity is gradually improved from the vicinity of a wavelength of 1000 nm and high transmittance is exhibited in a long-wavelength region in the vicinity of a wavelength of 2000 nm. In addition, x/y is more preferably 0.10 or more and 1.50 or less, and still more preferably 0.40 or more and 0.60 or less.

In addition, in a case where the manganese oxide particle of the invention contains Li and one or more elements selected from Mg, Ca, Al, Ti, Fe, Zn, Bi, and Y, the transmittance in the visible light region is low, and the transmittance in the near-infrared region is high, which is more preferable. Furthermore, in the manganese oxide of the invention, it is particularly preferable that the constituent element A contains Li, and Mg and/or Al, from the viewpoint that the transmittance in the near-infrared region is increased.

Also, in the manganese oxide particles of the invention, when the constituent element A contains Y, it is preferable from the viewpoint that while suppressing transmission in the visible light region, the transmittance rises steeply from a low wavelength side in the vicinity of a wavelength of 1000 nm, which is the near-infrared region, and high transmissivity is exhibited thereafter.

Furthermore, in the manganese oxide particles of the invention, the constituent element A contains Y, the composition formula of the manganese oxide is represented by AxMnyOz, and it is preferable that x/y = 0.001 or more and 2.00 or less, from the viewpoint that while suppressing transmission in the visible light region, the transmittance rises steeply from a low wavelength side in the vicinity of a wavelength of 1000 nm, which is the near-infrared region, and high transmissivity is exhibited thereafter.

In the manganese oxide particles of the invention, the constituent element A contains Y and it is preferable that the intensity ratio (211)/(112) of the peak intensity derived from the (211) plane appearing at 2θ = 35.5 to 36.5° to the peak intensity derived from the (112) plane appearing at 2θ = 32.5 to 33.5° in the XRD spectrum of the manganese oxide is 2.50 or less, and it is particularly preferable that the ratio is 0.10 or more and 1.00 or less from the viewpoint of high blackness (a* and b* are close to 0).

Here, in the manganese oxide particles containing Y in the constituent element A of the invention, the intensity ratio (211)/(112) of the peak intensity derived from the (211) plane appearing at 2θ = 35.5 to 36.5° to the peak intensity derived from the (112) plane appearing at 2θ = 32.5 to 33.5° in the XRD spectrum using CuKα rays is preferably 2.50 or less, and more preferably 0.10 or more and 1.00 or less from the viewpoint of high blackness (a* and b* are close to 0). The sample obtained from the manganese oxide particles containing Y as the constituent element A is subjected to powder X-ray diffraction measurement using CuKα rays according to the above-mentioned powder X-ray diffraction measurement conditions to obtain an X-ray diffraction pattern. In the obtained X-ray diffraction pattern, the peak intensity at 2θ = 32.5 to 33.5° is attributed to the YMnOs (112) plane, and the peak intensity at 2θ = 35.5 to 36.5° is attributed to the Mn₃O₄ (221) plane.

Additionally, in the manganese oxide particles of the invention, when the constituent element A contains Y and one or more elements selected from Li, Ca, Al, Ti, Fe, Zn, and Bi, it is more preferable from the viewpoint that while suppressing transmission in the visible light region, the transmittance rises steeply from a low wavelength side in the vicinity of a wavelength of 1000 nm, which is the near-infrared region, and high transmissivity is exhibited thereafter. Furthermore, in the manganese oxide particles of the invention, it is particularly preferable that the constituent element A contains Y and Zn, from the viewpoint of further increasing the transmissivity in the near-infrared region.

In addition, in the manganese oxide particles of the invention, the manganese oxide particles are for a near-infrared transmission material.

As described above, the manganese oxide particles of the invention have a low transmittance in the visible light region and an excellent transmission capability in the near-infrared region, and thus are preferably used for a near-infrared transmission material.

Note that from the viewpoint of enhancing dispersibility, the manganese oxide particles of the invention may be subjected to a surface treatment, or a surface treatment agent may be added to the system. Examples of the surface treatment agent include a silane coupling agent. In addition, the surface treatment agent may be used alone, or two or more kinds of the surface treatment agents may be used in arbitrary combination.

The near-infrared transmission material of the invention is characterized by a near-infrared transmission material containing manganese oxide particles and a dispersion containing a component that transmits near-infrared rays , in which the manganese oxide is represented by A-Mn-O as constituent elements, and the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

The near-infrared transmission material of the invention contains the above-mentioned manganese oxide particles of the invention and a dispersion having a component that transmits near-infrared rays, and may be a mixture obtained by mixing the manganese oxide particles and the dispersion, or a material obtained by coating the manganese oxide particles on the surface of the dispersion.

The manganese oxide particles contained in the near-infrared transmission material of the invention are not limited to manganese oxide particles having the same composition and the same characteristics. For example, in order to adjust fluidity, manganese oxide particles having the same composition but different particle size distributions may be appropriately mixed. In addition, in order to adjust the transmittance in the near-infrared region, manganese oxide particles having different compositions may be appropriately mixed. Furthermore, manganese oxide particles having different compositions and characteristics may be appropriately mixed depending on the use.

The dispersion may have a component that transmits near-infrared rays and does not indicate that all the components contained in the dispersion are components that transmit near-infrared rays.

Additionally, the near-infrared transmission material of the invention includes not only a structure in which the manganese oxide particles are uniformly dispersed in the dispersion, but also a structure in which a plurality of manganese oxide particles are aggregated to form aggregates and are dispersed in the dispersion, and a state in which the manganese oxide particles are segregated in the dispersion.

Further, the near-infrared transmission material of the invention is characterized by having an L* of 45 or less as measured by CIE1976.

The near-infrared transmission material of the invention preferably has an L* of 45 or less as measured by CIE1976 from the viewpoint that the appearance becomes more black and the transmittance in the visible light region can be reduced, more preferably has an L* of 40 or less, still more preferably has an L* of 35 or less, particularly preferably has an L* of 30 or less, more particularly preferably has an L* of 20 or less, and most preferably has an L* of 0. Note that the near-infrared transmission material of the invention typically has an L* of 20 to 45 as measured by CIE1976.

Furthermore, the value of a* in the CIE1976 (L*a*b*) color space is preferably -5 to 20, more preferably -5 to 15, still more preferably -5 to 10, particularly preferably -5 to 5, more particularly preferably -2 to 2, and most preferably 0. As the value of a* is closer to 0, coloring is more suppressed. In addition, the value of b* in the CIE1976 (L*a*b*) color space is preferably -10 to 25, more preferably -5 to 20, still more preferably -5 to 15, particularly preferably -5 to 5, more particularly preferably -2 to 2, and most preferably 0. As the value of b* is closer to 0, coloring is more suppressed.

Further, the near-infrared transmission material of the invention is characterized in that the transmittance at a wavelength of 700 nm (visible light region) is 30% or less, and the transmittance at a wavelength of 2000 nm (near-infrared ray region) is 10% or more, which is larger than the transmittance at a wavelength of 700 nm (visible light region).

The transmittance of the near-infrared transmission material of the invention is measured using a spectrophotometer with respect to a near-infrared transmission film (sample) obtained by coating the near-infrared transmission material of the invention onto a film made of polyethylene terephthalate (hereinafter referred to as PET) and firing the film. It is preferable that the transmittance at a wavelength of 700 nm which is the visible light region is 30% or less, and the transmittance at a wavelength of 2000 nm (near-infrared region) is 10% or more, which is larger than the transmittance at a wavelength of 700 nm, from the viewpoint that the visible light rays are not transmitted as much as possible and the near-infrared rays are transmitted.

In addition, the transmittance at a wavelength of 700 nm which is the visible light region is more preferably 27% or less, still more preferably 20% or less, particularly preferably 15% or less, more particularly preferably 10% or less, still more particularly preferably 5% or less, and most preferably 0%. The transmittance at a wavelength of 700 nm (visible light region) of the near-infrared transmission material of the invention is typically 0.1% to 10%, and may be 1% to 10%.

On the other hand, the transmittance at a wavelength of 2000 nm (near-infrared region) is more preferably 30% or more, still more preferably 50% or more, and particularly preferably 80% or more.

In addition, the transmittance at a wavelength of 550 nm which is the visible light region is more preferably 15% or less, still more preferably 10% or less, particularly preferably 5% or less, and most preferably 0%. The transmittance at a wavelength of 550 nm (visible light region) of the near-infrared transmission material of the invention is typically 0.1% to 10%, and may be 1% to 10%.

Further, the near-infrared transmission material of the invention is characterized in that the near-infrared transmission material has a transmittance at a wavelength of 700 nm (visible light region) of 30% or less, and transmittances at a wavelength of 1000 nm (near-infrared region) and a wavelength of 2000 nm (near-infrared region) of 10% or more, which are larger than the transmittance at a wavelength of 700 nm (visible light region).

It is preferable that the transmittance at a wavelength of 700 nm which is the visible light region is 30% or less, and the transmittances at a wavelength of 1000 nm (near-infrared region) and a wavelength of 2000 nm (near-infrared region) are 10% or more, which are larger than the transmittance at a wavelength of 700 nm, from the viewpoint that the visible light rays are not transmitted as much as possible and the near-infrared rays are transmitted. Further, in the near-infrared transmission material of the invention, it is more preferable that the transmittance at a wavelength of 700 nm which is the visible light region is 30% or less, and the transmittances at wavelengths of 1000 nm, 1200 nm, 1400 nm, 1600 nm, 1800 nm, 2000 nm, 2200 nm, and 2400 nm which are the near-infrared region are 10% or more, which are larger than the transmittance at a wavelength of 700 nm. More preferably, the near-infrared transmission material of the invention has a transmittance at a wavelength of 700 nm which is the visible light region of 30% or less and has transmittances at wavelengths of 1000 nm to 2400 nm which are the near-infrared region of 10% or more, which are larger than the transmittance at a wavelength of 700 nm.

Moreover, the near-infrared transmission material of the invention is characterized in that the reflectances of light at a wavelength of 550 nm and a wavelength of 700 nm of the near-infrared transmission material are 20% or less.

It is preferable that the the reflectances of light at a wavelength of 550 nm and a wavelength of 700 nm are 20% or less, from the viewpoint that not only the visible light is not simply transmitted but also the visible light absorbing capability is excellent. The reflectances of light at a wavelength of 550 nm and a wavelength of 700 nm are more preferably 15% or less, still more preferably 12% or less, particularly preferably 10% or less, more particularly preferably 5% or less, and most preferably 0%. Further, it is more preferable that the reflectances of light at a wavelength of 550 nm, a wavelength of 600 nm, a wavelength of 650 nm, and a wavelength of 700 nm of the near-infrared transmission material of the invention are equal to or less than the above-described upper limit value. It is still more preferable that the reflectances of light at wavelengths of 550 nm to 700 nm of the near-infrared transmission material of the invention are equal to or less than the above-described upper limit value. Note that the reflectances of light at a wavelength of 550 nm and a wavelength of 700 nm of the near-infrared transmission material of the invention are typically 0.1% to 10%, and may be 1% to 10%.

The manganese oxide particles according to the invention used for the measurement of the reflectance can be taken out from the near-infrared transmission material of the invention by the following method. In the case where the dispersion is a resin, the manganese oxide particles can be taken out by heating at a temperature and for a time at which the resin is sufficiently burned out. In the case where the dispersion is a solvent such as an organic solvent or water, the manganese oxide particles can be taken out by volatilizing each solvent.

Further, the near-infrared transmission material of the invention is characterized in that the dispersion is a resin, a glass, an organic solvent, or water, or a mixture of two or more kinds thereof.

The dispersion preferably has a component that transmits near-infrared rays.

As the resin used in the dispersion, the type of the resin is not particularly limited, and a resin that can be molded into a desired shape can be used. For example, a thermoplastic resin, a thermosetting resin, an ionizing radiation curable resin, and a two liquid mixed curable resin can be used.

Among these resins, a thermoplastic resin is preferably used as the matrix resin from the viewpoint of ease of molding into a sheet having a large film thickness. Examples of the thermoplastic resin include at least one or more resins such as a polyolefin-based resin such as polyethylene or polypropylene, a polyester-based resin such as polyethylene terephthalate or polybutylene terephthalate, a polycarbonate resin, a polyacrylic acid-based resin such as polyacrylic acid or an ester thereof, or polymethacrylic acid or an ester thereof, a polyvinyl-based resin such as polystyrene or polyvinyl chloride, a cellulose-based resin such as triacetyl cellulose, and a urethane resin such as polyurethane. Note that the thermoplastic resin also includes those molded into a multilayer mold, polymer blends, and copolymers.

In addition, from the viewpoint of easy molding into a sheet having a thin film thickness, it is preferable to use at least one of a thermosetting resin, an ionizing radiation curable resin, and a two liquid mixed curable resin as the matrix resin. Examples of the thermosetting resin include a phenol resin, an epoxy resin, a melamine resin, a urea resin, an unsaturated polyester resin, an alkyd resin, a polyurethane resin, and a polyimide resin. Further, examples of the ionizing radiation curable resin include an acrylic resin, a urethane resin, a vinyl ester resin, and a polyester alkyd resin. These resins can be used not only as polymers but also as oligomers and monomers. Further, examples of the two liquid mixed curable resin include an epoxy resin.

Examples of the glass used in the dispersion include a glass plate, water glass, quartz, and powdered glass.

As the organic solvent used in the dispersion, both a water-soluble organic solvent and a water-insoluble organic solvent can be used. In the case of using a water-soluble organic solvent, it can also be used as a mixed solvent obtained by mixing with water. Specifically, as the water-soluble organic solvent, an organic solvent which is compatible with water, such as a monoalcohol, a polyhydric alcohol, a ketone, an ester, an amine, a thiol, a pyrrolidone, can be used. Here, examples of the monoalcohol include methanol, ethanol, industrial ethanol, and isopropyl alcohol. In addition, examples of the polyhydric alcohol include ethylene glycol, oligoethylene glycol, propylene glycol, oligopropylene glycol, a copolymer of ethylene glycol and propylene glycol, and butylene glycol. Further, examples of the ketone include acetone, methyl ethyl ketone, diethyl ketone, methyl propyl ketone, methyl isobutyl ketone, methyl amyl ketone, cyclohexanone, and isophorone.

On the other hand, as the water-insoluble organic solvent, for example, an organic solvent incompatible with water represented by a saturated or unsaturated hydrocarbon-based compound, a halogenated hydrocarbon and a cyclic compound thereof, a long-chain monoalcohol or polyhydric alcohol, an aromatic compound, or the like can be used. These organic solvents can be used singly or in combination of two or more thereof.

Examples of the water used in the dispersion include general tap water (including an ionic component), ion-exchanged water, pure water, and ultrapure water.

The resin, glass, organic solvent, or water used as the above-described dispersion does not affect the characteristics of the near-infrared transmission material of the invention unless otherwise specified.

The manganese oxide, the manganese oxide particles, and the near-infrared transmission material of the invention may contain, as an additive, oxide particles of Nb, Ta, Ti, Si, Zr, Zn, Al, Y, V, La-based elements (La, Ce, Nd, Eu, Gd, Dy, Yb), or the like. The content of the additive in the manganese oxide, the manganese oxide particles, and the near-infrared transmission material of the invention is preferably less than 1% by mass, more preferably less than 0.1% by mass, and still more preferably less than 0.01% by mass. Note that the content of the additive may exceed the above-mentioned range as long as the characteristics of the manganese oxide, the manganese oxide particles, and the near-infrared transmission material of the invention are not impaired.

Furthermore, the manganese oxide, the manganese oxide particles, and the near-infrared transmission material of the invention may contain components (referred to as "other components") other than the components derived from manganese or manganic acid and the components derived from the dispersion as long as the effects thereof are not inhibited. Examples of the other components include Nb, Ta, Ti, Si, Zr, Zn, Al, Y, V, and La-based elements (La, Ce, Nd, Eu, Gd, Dy, and Yb). However, the invention is not limited thereto. The content of the other components in the manganese oxide, the manganese oxide particles, and the near-infrared transmission material of the invention is preferably less than 5% by mass, more preferably less than 4% by mass, and still more preferably less than 3% by mass. It is to be noted that the manganese oxide, the manganese oxide particles, and the near-infrared transmission material of the invention are assumed to contain unavoidable impurities, unintentionally. The total content of unavoidable impurities is preferably less than 10% by mass, more preferably less than 7% by mass, still more preferably less than 5% by mass, particularly preferably less than 3% by mass, and still particularly preferably less than 1% by mass.

The method for producing a near-infrared transmission material of the invention described above will be described below.

First, as an example of a method for producing manganese oxide particles constituting the near-infrared transmission material of the invention, a method for producing lithium manganate (hereinafter referred to as "the LMO-MgAl") in which the constituent element A of the manganese oxide particles is "Li", "Mg", and "Al" will be described below.

The LMO-MgAl is obtained by mixing a manganese raw material, a lithium raw material, a magnesium raw material, and an aluminum raw material, granulating and drying the mixture as necessary, firing the mixture, classifying the mixture as necessary, performing heat treatment as necessary, and further classifying the mixture as necessary.

Additionally, in the LMO-MgAl, a boron compound may be added to and mixed with a manganese raw material, a lithium raw material, a magnesium raw material, and an aluminum raw material, wet pulverized, granulated, dried, and fired.

Here, the manganese raw material is not particularly limited, and examples thereof include manganese oxide (II) (manganese monoxide), manganese oxide (II, III), manganese oxide (III), manganese oxide (IV) (manganese dioxide), manganese oxide (VI), and manganese oxide (VII).

The lithium raw material is not particularly limited, and examples thereof include lithium hydroxide (LiOH), lithium carbonate (Li₂CO₃), lithium nitrate (LiNOs), lithium hydroxide hydrate (LiOH·H₂O), lithium oxide (Li₂O), other lithium fatty acids, and lithium halogen compounds. In particular, hydroxides, carbonates, and nitrates of lithium are preferable.

The magnesium raw material is not particularly limited, and examples thereof include magnesium oxide (MgO), magnesium hydroxide (Mg(OH)₂), magnesium fluoride (MgF₂), magnesium nitrate (Mg(NO₃)₂), magnesium chloride (MgCl₂), and magnesium sulfate (MgSO₄). In particular, magnesium oxide is preferable.

The aluminum raw material is not particularly limited, and examples thereof include aluminum hydroxide (Al(OH)₃) and aluminum fluoride (AlF₃). In particular, aluminum hydroxide is preferable.

The boron compound is added as a flux component in order to promote compounding of the manganese raw material, the lithium raw material, the magnesium raw material, and the aluminum raw material. In addition, the boron compound remains as an impurity on the surface of the manganese oxide particles constituting the near-infrared transmission material of the invention without forming a solid solution after firing, but can be removed by washing with water, wet pulverization, or the like. The content of the boron compound in the near-infrared transmission material of the invention is preferably less than 5% by mass, more preferably less than 3% by mass, and still more preferably less than 1% by mass. Note that the content of the boron compound was calculated as a weight ratio of the content as the "boron (B)" element by inductively coupled plasma spectrometry (AG-5110, manufactured by Agilent Technologies Inc.).

Here, the boron compound is preferably boric acid or lithium borate. Examples of the lithium borate include various forms such as lithium metaborate (LiBOs), lithium tetraborate (Li₂B₄O₇), lithium pentaborate (LiBsOs), and lithium perborate (Li₂B₂O₆), but lithium tetraborate (Li₂B₄O₇) is particularly preferable.

The method for mixing the above-mentioned various raw materials is not particularly limited as long as the raw materials can be uniformly mixed. For example, using a known mixing machine such as a mixer, the raw materials may be added simultaneously or in an appropriate order, and stirred and mixed in a wet or dry manner. In the case of wet mixing, it is preferable that a liquid medium such as water or a dispersant is added and wet mixed to form a slurry, and the obtained slurry is pulverized by a wet pulverizer. In particular, it is preferable to pulverize to a submicron order. By pulverizing to a submicron order and then granulating and firing, the uniformity of each particle before the firing reaction can be enhanced, and the reactivity can be enhanced. Furthermore, as described above, the mixed various raw materials may be fired as they are, or may be granulated into a predetermined size and then fired.

The granulation method may be a wet method or a dry method as long as the pulverized various raw materials are dispersed in the granulated particles without being separated, and may be an extrusion granulation method, a tumbling granulation method, a fluidized granulation method, a mixing granulation method, a spray drying granulation method, a pressure molding granulation method, or a flake granulation method using a roll or the like. However, in the case of wet granulation, it is necessary to sufficiently dry before firing. The drying method may be a known drying method such as a spray heat drying method, a hot air drying method, a vacuum drying method, or a freeze drying method, and the spray heat drying method is particularly preferable. The spray heat drying method is preferably performed using a thermal spray dryer (spray dryer). By performing granulation using a thermal spray dryer (spray dryer), not only the particle size distribution can be made sharper, but also the particles can be prepared so as to contain aggregated particles (secondary particles) formed by round aggregation.

The firing is preferably performed in a firing furnace in an air atmosphere, an oxygen gas atmosphere, an atmosphere with an adjusted oxygen partial pressure, a carbon dioxide gas atmosphere, or another atmosphere by increasing the temperature at a temperature increase rate of 50 to 200°C/hr and maintaining the temperature at 400 to 1500°C (which means the temperature when a thermocouple is brought into contact with the fired product in the firing furnace) for 0.5 to 30 hours. However, in the case of firing together with the boron compound, the firing can be performed in a temperature range lower than the above-described firing temperature. The type of the firing furnace is not particularly limited. For example, the firing can be performed using a rotary kiln, a stationary furnace, or other firing furnaces.

The fired product obtained by firing may be used as it is as the LMO-MgAl (manganese oxide particles). Alternatively, the fired product may be pulverized and used as the LMO-MgAl (manganese oxide particles). In addition, regardless of whether the fired product is pulverized, the undersize (fine particle side) obtained by classifying the fired product with a sieve or the like may be used as the LMO-MgAl (manganese oxide particles). The oversize (coarse particle side) may be pulverized again and classified before use.

The pulverization method can be performed by a dry method or a wet method. In the case of a dry method, the fired product can be pulverized by using a commercially available dry pulverization device such as an attriter, a blade-type pulverizer, a jet mill, or a ball mill. On the other hand, in the case of a wet method, the fired product is mixed with water or an organic solvent to form slurry in which the fired product is dispersed in water or an organic solvent. Next, the fired product dispersed in the slurry can be pulverized by using a commercially available wet pulverization device such as a media mill such as a ball mill or a beads mill, or an emulsifying machine or dispersing machine utilizing high-speed shearing. Examples of the beads to be used include zirconia beads, alumina beads, and glass beads. In addition, a medialess pulverizer in which pulverization is performed by inter-particle collision under high-pressure conditions without using a pulverization medium may be used, which is preferable from the viewpoint of reducing the risk of contamination of metal powder and the like generated from the pulverization medium. In addition, a dispersant may be added to the slurry as necessary.

In the case of wet pulverization, the pulverized fired product and the solvent are separated using a filter, a centrifugal separator, or the like, and dried at a temperature at which the solvent is volatilized, thereby obtaining the pulverized LMO-MgAl (manganese oxide particles).

In addition, as the pulverization method, the LMO-MgAl (manganese oxide particles) having a smaller diameter may be obtained by performing two stage pulverization in which the above-described pulverization is repeated twice. Examples of the pulverization method in the first stage include a pulverization method using the above-described dry pulverization apparatus or wet pulverization apparatus. Next, examples of the pulverization method in the second stage include a pulverization method using the above-described dry pulverization apparatus or wet pulverization apparatus.

The manganese oxide particles of the invention are not limited to the above-described LMO-MgAl, and can also be obtained by mixing a manganese raw material, an yttrium raw material, and a zinc raw material, granulating and drying the mixture as necessary, firing the mixture, classifying the mixture as necessary, further performing a heat treatment as necessary, and furthermore classifying the mixture as necessary.

Examples of the yttrium raw material include yttrium oxide (Y₂O₃), yttrium carbonate (Y₂(CO₃)₃·3H₂O), yttrium acetate (Y(CH₃COO)₃·4H₂O), yttrium fluoride (YF₃), and yttrium nitrate (Y(NO₃)₃·nH₂O). In particular, yttrium oxide (Y₂O₃) is preferable.

Examples of the zinc raw material include zinc oxide (ZnO), zinc sulfide (ZnS), zinc fluoride tetrahydrate (ZnF₂·4H₂O), and zinc stearate ([CH₃(CH₂)₁₆COO]₂Zn). In particular, zinc oxide (ZnO) is preferable.

Further, as other raw materials, the following raw materials are included. Examples of the sodium raw material include sodium carbonate (Na₂CO₃), sodium hydroxide (NaOH), sodium hydrogen carbonate (NaHCOs), sodium nitrate (NaNOs), sodium sulfate (Na₂SO₄), and sodium chloride (NaCl). In particular, sodium carbonate (Na₂CO₃) is preferable.

Examples of the calcium raw material include calcium carbonate (CaCOs), calcium oxide (CaO), calcium hydroxide (CaOH), calcium nitrate (Ca(NO₃)₂), and calcium sulfate (CaSO₄). In particular, calcium carbonate (CaCOs) is preferable.

Examples of the strontium raw material include strontium carbonate (SrCos), strontium sulfate (SrSO₄), strontium nitrate (Sr(NO₃)₂), and strontium chloride (SrCl₂).

Examples of the barium raw material include barium carbonate (BaCOs), barium sulfate (BaSO₄), barium hydroxide (Ba(OH)₂), and barium fluoride (BaF₂). In particular, barium carbonate (BaCO₃) is preferable.

Examples of the bismuth raw material include bismuth oxide (Bi₂O₃), basic bismuth carbonate ((BiO)₂CO₃), bismuth sulfate (Bi₂(SO₄)₃), and bismuth nitrate pentahydrate (Bi(NO₃)₃·5H₂O). In particular, basic bismuth carbonate ((BiO)₂CO₃) is preferable.

Examples of the lanthanum raw material include lanthanum oxide (La₂O₃), lanthanum carbonate (La₂(CO₃)₃), lanthanum hydroxide (La(OH)₃), lanthanum sulfate (La₂(SO₄)₃·9H₂O), and lanthanum nitrate (La(NO₃)₃·6H₂O). In particular, lanthanum carbonate (La₂(CO₃)₃) is preferable.

Examples of the praseodymium raw material include praseodymium oxide (Pr₆O₁₁), praseodymium acetate ((CH₃COO)₃Pr·nH₂O), praseodymium fluoride (PrFs), and praseodymium carbonate octahydrate (Pr₂(CO₃)₃·8H₂O). In particular, praseodymium oxide (Pr₆O₁₁) is preferable.

Examples of the neodymium raw material include neodymium oxide (Nd₂O₃), neodymium carbonate (Nd₂(CO₃)₃·8H₂O), and neodymium fluoride (NdFs). In particular, neodymium carbonate (Nd₂(CO₃)₃·8H₂O) is preferable.

Examples of the iron raw material include iron oxide (Fe₂O₃), iron oxide (Fe₃O₄), iron sulfate (FeSO₄), iron carbonate (FeCO₃), and iron nitrate (Fe(NO₃)₃). In particular, iron oxide (Fe₂O₃) is preferable.

Examples of the titanium raw material include titanium oxide (TiO₂) (rutile, anatase, brookite, bronze), and titanium tetraisopropoxide ([(CH₃)₂CHO]₄Ti). In particular, titanium oxide (TiO₂) (anatase) is preferable.

The LMO-MgAl (manganese oxide particles) thus obtained is mixed with a dispersion to obtain the near-infrared transmission material of the invention, as described below.

In the case where the dispersion is a resin, the near-infrared transmission material (dispersion: resin) of the invention is obtained by mixing the resin as the dispersion to the LMO-MgAl at a predetermined ratio. Specifically, when the dispersion is a thermosetting resin, the LMO-MgAl and the thermosetting resin may be mixed before heating, or an organic solvent for diluting the thermosetting resin may be further added and mixed. Here, when the LMO-MgAl and the thermosetting resin are mixed, a rotation and revolution mixer, a stirrer, a three roll mill, or the like can be used. Thereafter, the mixture is heated to a temperature at which the thermosetting resin is cured to cure the mixture, and thus the near-infrared transmission material (dispersion: resin) of the invention can be obtained.

Moreover, when the dispersion is a thermoplastic resin, the near-infrared transmission material (dispersion: resin) of the invention can be obtained, for example, by mixing the LMO-MgAl into the thermoplastic resin heated by a kneader or the like. Further, when the dispersion is a resin film, the near-infrared transmission material (dispersion: resin) of the invention can be obtained, for example, by coating the LMO-MgAl on a film made of PET or polyethylene naphthalate (PEN). In the coating, a mixture of the LMO-MgAl, a resin, and an organic solvent can be coated using a bar coater or a blade. Further, a mixture of the LMO-MgAl and a resin may be formed into a film by extrusion molding.

Additionally, in the near-infrared transmission material (dispersion: resin) of the invention, it is preferable that the LMO-MgAl is uniformly dispersed in the resin as the dispersion.

In a case where the dispersion is a glass, the near-infrared transmission material (dispersion: glass) of the invention is obtained by mixing the glass as the dispersion, for example, powder glass, to the LMO-MgAl at a predetermined ratio. Note that, in the near-infrared transmission material (dispersion: glass) of the invention, it is preferable that the LMO-MgAl is uniformly dispersed in the glass as the dispersion.

In the case where the dispersion is an organic solvent, the near-infrared transmission material (dispersion: organic solvent) of the invention is obtained by mixing the organic solvent as the dispersion to the LMO-MgAl at a predetermined ratio.

First, by mixing the LMO-MgAl and an organic solvent, a slurry in which the LMO-MgAl particles are dispersed in the organic solvent is obtained. At this time, a dispersant may be added. Next, the obtained slurry is subjected to wet pulverization or dispersion treatment using a media mill such as a beads mill, a high water pressure jet mill, a homogenizer, or the like, whereby the near-infrared transmission material (dispersion: organic solvent) of the invention can be obtained. Here, examples of the beads used in the bead mill include zirconia beads and alumina beads. Furthermore, the dispersant may be added to the slurry at the time of wet pulverization, or may be added to the oily dispersion obtained by wet pulverization. The addition amount of the dispersant may be appropriately adjusted.

Note that, in the near-infrared transmission material (dispersion: organic solvent) of the invention, it is preferable that the LMO-MgAl is uniformly dispersed in the organic solvent as the dispersion.

In the case where the dispersion is water, the near-infrared transmission material (dispersion: water) of the invention is obtained by mixing water as the dispersion to the LMO-MgAl at a predetermined ratio.

First, by mixing the LMO-MgAl and water, a slurry in which the LMO-MgAl particles are dispersed in water is obtained. At this time, a dispersant may be added. Next, the obtained slurry is subjected to wet pulverization or dispersion treatment using a media mill such as a beads mill, a high water pressure jet mill, a homogenizer, or the like, whereby the near-infrared transmission material (dispersion: water) of the invention can be obtained. Here, examples of the beads used in the bead mill include zirconia beads and alumina beads. Furthermore, the dispersant may be added to the slurry at the time of wet pulverization, or may be added to the oily dispersion obtained by wet pulverization. The addition amount of the dispersant may be appropriately adjusted.

Note that, in the near-infrared transmission material (dispersion: water) of the invention, it is preferable that the LMO-MgAl is uniformly dispersed in water as the dispersion.

The near-infrared transmission film of the invention is characterized by including the above-described near-infrared transmission film of the invention.

The near-infrared transmission film of the invention includes the above-described near-infrared transmission film of the invention, and can be used as an optical filter for an infrared sensor or an infrared camera.

The near-infrared sensor of the invention is characterized by having an optical filter on which the above-described near-infrared transmission film of the invention is formed.

It is preferable that the near-infrared sensor of the invention has the optical filter on which the above-described near-infrared transmission film of the invention is formed, because visible light rays are not transmitted as much as possible but near-infrared rays can be transmitted.

The method for producing a near-infrared transmission film of the invention described above will be described below.

The method for producing a near-infrared transmission film of the invention includes a step of coating the above-described near-infrared transmission material of the invention onto a base material and drying the coated near-infrared transmission material to form a near-infrared transmission film. In addition, examples of the base material include glass, acrylic, and a resin-molded body.

The near-infrared transmission material produced by the above-described method for producing a near-infrared transmission material of the invention is coated onto a base material using a bar coater. Then, the base material coated with the near-infrared transmission material of the invention is placed in a stationary furnace and dried at room temperature (25°C) for 3 hours, thereby obtaining the near-infrared transmission film of the invention. Alternatively, the base material coated with the near-infrared transmission material of the invention may be placed in a stationary furnace, and heated to 110°C and dried for 6 hours, or heated to 600°C and fired for 3 hours.

### Advantageous Effects of Invention

The manganese oxide, the manganese oxide particles, the near-infrared transmission material, and the near-infrared transmission film of the invention do not transmit visible light rays as much as possible, but can transmit near-infrared rays.

### Brief Description of Drawings

[FIG. 1] FIG. 1 is a table of physical property values and measurement results of near-infrared transmission materials according to Examples 1 to 3 of the invention, a titanium oxide mixture according to Comparative Example 1, and a carbon black mixture according to Comparative Example 2.
[FIG. 2] FIG. 2 is a table of physical property values and measurement results of near-infrared transmission materials according to Examples 4 to 14 of the invention.
[FIG. 3] FIG. 3 is a table of physical property values and measurement results of near-infrared transmission materials according to Examples 15 to 20 of the invention.
[FIG. 4] FIG. 4 is a table of physical property values and measurement results of near-infrared transmission materials according to Examples 21 to 26 of the invention.
[FIG. 5] FIG. 5 is a table of physical property values and measurement results of near-infrared transmission materials according to Examples 1 to 3, 10 and 26 of the invention.
[FIG. 6] FIG. 6 is a table of physical property values and measurement results of near-infrared transmission materials according to Examples 27 to 30 of the invention.
[FIG. 7] FIG. 7 is a table of physical property values and measurement results of near-infrared transmission materials according to Examples 31 to 38 of the invention.
[FIG. 8] FIG. 8 is a table of physical property values and measurement results of near-infrared transmission materials according to Examples 39 to 41 of the invention.
[FIG. 9] FIG. 9 is a graph showing transmittances at wavelengths 400 nm to 2400 nm of coating films formed from the near-infrared transmission materials according to Examples 1 to 3 of the invention.
[FIG. 10(a)] FIG. 10(a) is a graph showing transmittances at wavelengths 400 nm to 2400 nm of coating films formed from the near-infrared transmission materials according to Examples 4 to 9 of the invention, and [FIG. 10(b)] FIG. 10(b) is a graph showing transmittances at wavelengths 400 nm to 2400 nm of coating films formed from the near-infrared transmission materials according to Examples 10 to 14 of the invention.
[FIG. 11] FIG. 11 is a graph showing transmittances at wavelengths 400 nm to 2400 nm of coating films formed from the near-infrared transmission materials according to Examples 15 to 20 of the invention.
[FIG. 12] FIG. 12 is a graph showing transmittances at wavelengths 400 nm to 2400 nm of coating films formed from the near-infrared transmission materials according to Examples 21 to 26 of the invention.
[FIG. 13] FIG. 13 is a graph showing transmittances at wavelengths 400 nm to 2400 nm of coating films formed from the near-infrared transmission materials according to Examples 1 to 3, 10 and 26 of the invention.
[FIG. 14] FIG. 14 is a graph showing transmittances at wavelengths 400 nm to 2400 nm of coating films formed from the near-infrared transmission materials according to Examples 27 to 30 of the invention.
[FIG. 15] FIG. 15 is a graph showing transmittances at wavelengths 400 nm to 2400 nm of coating films formed from the near-infrared transmission materials according to Examples 31 to 38 of the invention.
[FIG. 16] FIG. 16 is a graph showing transmittances at wavelengths 400 nm to 2400 nm of coating films formed from the near-infrared transmission materials according to Examples 39 to 41 of the invention.
[FIG. 17] FIG. 17 is a graph showing transmittances at wavelengths 400 nm to 2400 nm of coating films formed from the near-infrared transmission materials according to Examples 10, 35 and 36 of the invention.

### Description of Embodiments

Hereinafter, the manganese oxide, the manganese oxide particles, the near-infrared transmission material, and the near-infrared transmission film according to the embodiments of the invention will be further described with reference to the following Examples. However, the following Examples are not intended to limit the invention.

### (Example 1)

A manganese oxide according to Example 1 is lithium manganate particles (LMO-MgAl) in which the constituent element A is Li, Mg, and Al.

In the lithium manganate particles (LMO-MgAl) according to Example 1, the molar number of the constituent element A (Li, Mg, Al) was 0.625 mol, the molar number of Mn was 1 mol, the molar number of A + Mn was 1.625 mol, the molar ratio of A/(A + Mn) was 0.385, the molar ratio of Mn/(A + Mn) was 0.615, and the molar ratio of A/Mn was 0.625.

Specifically, trimanganese tetraoxide (228.81 g/mol), lithium carbonate (73.891 g/mol), magnesium oxide (40.304 g/mol), and aluminum hydroxide (78.000 g/mol) were weighed and mixed in a molar ratio of Mn:Li:Mg:Al = 1.04:0.60:0.004:0.044 to obtain a mixed raw material.

The obtained mixed raw material was placed in an alumina crucible, held at a firing temperature (holding temperature) of 770°C for 20 hours in an air atmosphere using a stationary electric furnace, and then naturally cooled to room temperature to obtain a fired powder.

The fired powder obtained by firing was crushed in a mortar and classified with a sieve having an opening of 75 µm, and the powder under the sieve was obtained as lithium manganate particles (LMO-MgAl) according to Example 1.

Next, 20.0 g of the lithium manganate particles (LMO-MgAl) according to Example 1, 11.1 g of an acrylic resin (DIANAL LR167, manufactured by Mitsubishi Chemical Corporation), and 18.9g of ethyl acetate were mixed in a container so that the solid content conversion pigment concentration (PWC) was 80%, and the obtained mixture was subjected to a dispersion treatment by using a paint shaker for 2 hours, thereby obtaining a near-infrared transmission material according to Example 1.

The near-infrared transmission material according to Example 1 obtained in this manner was coated onto a film made of PET ("Lumirror (registered trademark)": #100-T60 manufactured by Toray Industries, Inc.) using a bar coater (No. 10) to form a coated film, and a near-infrared-transmission film (film thickness of 5 µm) according to Example 1 was obtained.

### (Example 2)

A manganese oxide according to Example 2 is lithium manganate particles (LMO-MgAl) in which the constituent element A is Li, Mg, and Al.

In the lithium manganate particles (LMO-MgAl) according to Example 2, the molar number of the constituent element A (Li, Mg, Al) was 0.625 mol, the molar number of Mn was 1 mol, the molar number of A + Mn was 1.625 mol, the molar ratio of A/(A + Mn) was 0.385, the molar ratio of Mn/(A + Mn) was 0.615, and the molar ratio of A/Mn was 0.625.

A near-infrared transmission material according to Example 2 was obtained in the same manner as in Example 1 except that (i) the firing temperature at which the mixed raw material was fired was 570°C, and (ii) a pulverization treatment described later was performed.

In the pulverization treatment in Example 2, 100 g of 0.8 mmϕ zirconia beads were put into a 100 mL plastic container together with 30 g of the fired powder obtained by firing and 45 g of pure water, and the pulverization treatment was performed for 4 hours by a rocking shaker manufactured by Seiwa Giken Co., Ltd. Next, after the zirconia beads were separated using a mesh, solid-liquid separation was carried out using a compact centrifuge (CT6E manufactured by Eppendorf Himac Technologies Co., Ltd.), and the solid content was dried at 110°C using a dryer to obtain lithium manganate particles (LMO-MgAl) according to Example 2.

The near-infrared transmission material according to Example 2 was obtained in the same manner as in Example 1. Then, the coating film of the near-infrared transmission material according to Example 2 was formed in the same manner as in Example 1 except that the near-infrared transmission material was coated twice using a bar coater to obtain a near-infrared transmission film (film thickness of 9 µm) according to Example 2.

### (Example 3)

A manganese oxide according to Example 3 is lithium manganate particles (LMO-MgAl) in which the constituent element A is Li, Mg, and Al.

In the lithium manganate particles (LMO-MgAl) according to Example 3, the molar number of the constituent element A (Li, Mg, Al) was 0.625 mol, the molar number of Mn was 1 mol, the molar number of A + Mn was 1.625 mol, the molar ratio of A/(A + Mn) was 0.385, the molar ratio of Mn/(A + Mn) was 0.615, and the molar ratio of A/Mn was 0.625.

A near-infrared transmission material according to Example 3 was obtained in the same manner as in Example 1, except that (i) the firing temperature at which the mixed raw material was fired was 570°C, (ii) a two stage pulverization treatment described later was performed, and (iii) the lithium manganate particles (LMO-MgAl) according to Example 3, the acrylic resin, and ethyl acetate were mixed so that the solid content conversion pigment concentration (PWC) was 60% at the time of mixing.

In the two step pulverization treatment in Example 3, first, the pulverization treatment in Example 2 was performed as a first step pulverization treatment. Next, as a second stage pulverization treatment, 100 g of 0.2 mmϕ zirconia beads were put into a 100 mL plastic container together with 30 g of the dry powder obtained by performing the pulverization treatment in Example 2 and 45 g of pure water, and the pulverization treatment was performed for 4 hours by a rocking shaker manufactured by Seiwa Giken Co., Ltd. Next, after the zirconia beads were separated using a mesh, solid-liquid separation was carried out using a compact centrifuge (CT6E manufactured by Eppendorf Himac Technologies Co., Ltd.), and the solid content was dried at 110°C using a dryer to obtain lithium manganate particles (LMO-MgAl) according to Example 3.

The near-infrared transmission material according to Example 3 was obtained in the same manner as in Example 1. Then, the coating film of the near-infrared transmission material according to Example 3 was formed in the same manner as in Example 1 to obtain a near-infrared transmission film (film thickness of 5 µm) according to Example 3.

### (Example 4)

A manganese oxide according to Example 4 is sodium manganate particles (NaMnO) in which the constituent element A is Na.

In the sodium manganate particles (NaMnO) according to Example 4, the molar number of the constituent element A (Na) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the sodium manganate particles (NaMnO) according to Example 4 were obtained in the same manner as in Example 1 except that trimanganese tetraoxide (228.81 g/mol) and sodium carbonate (105.99 g/mol) were weighed and mixed so as to have a molar ratio of Mn:Na = 1.00:0.50 to obtain a mixed raw material.

Next, a near-infrared transmission material according to Example 4 was obtained in the same manner as in Example 1, except that 7.6 g of the sodium manganate particles (NaMnO) according to Example 4, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 80%.

Then, the coating film of the near-infrared transmission material according to Example 4 was formed in the same manner as in Example 1 to obtain a near-infrared transmission film (film thickness of 5 µm) according to Example 4.

### (Example 5)

A manganese oxide according to Example 5 is calcium manganate particles (CaMnO) in which the constituent element A is Ca.

In the calcium manganate particles (CaMnO) according to Example 5, the molar number of the constituent element A (Ca) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the calcium manganate particles (CaMnO) according to Example 5 were obtained in the same manner as in Example 1, except that (i) trimanganese tetraoxide (228.81 g/mol) and calcium carbonate (100.09 g/mol) were weighed and mixed so as to have a molar ratio of Mn:Ca = 1.00:0.50 to obtain a mixed raw material, and (ii) the firing temperature for firing the mixed raw material was 1000°C.

Next, a near-infrared transmission material according to Example 5 was obtained in the same manner as in Example 1, except that 7.6 g of the calcium manganate particles (CaMnO) according to Example 5, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 80%.

Then, the coating film of the near-infrared transmission material according to Example 5 was formed in the same manner as in Example 1 to obtain a near-infrared transmitting film (film thickness of 5 µm) according to Example 5.

### (Example 6)

A near-infrared transmission material according to Example 6 is strontium manganate particles (SrMnO) in which the constituent element A is Sr.

In the strontium manganate particles (SrMnO) according to Example 6, the molar number of the constituent element A (Sr) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the strontium manganate particles (SrMnO) according to Example 6 were obtained in the same manner as in Example 1, except that (i) trimanganese tetraoxide (228.81 g/mol) and strontium carbonate (147.63 g/mol) were weighed and mixed so as to have a molar ratio of Mn:Sr = 1.00:0.50 to obtain a mixed raw material, and (ii) the firing temperature for firing the mixed raw material was 1000°C.

Next, the near-infrared transmission material according to Example 6 was obtained in the same manner as in Example 1, except that 7.6 g of the strontium manganate particles (SrMnO) according to Example 6, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 80%.

Then, the coating film of the near-infrared transmission material according to Example 6 was formed in the same manner as in Example 1 to obtain a near-infrared transmitting film (film thickness of 5 µm) according to Example 6.

### (Example 7)

A manganese oxide according to Example 7 is barium manganate particles (BaMnO) in which the constituent element A is Ba.

In the barium manganate particles (BaMnO) according to Example 7, the molar number of the constituent element A (Ba) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the barium manganate particles (BaMnO) according to Example 7 were obtained in the same manner as in Example 1, except that (i) trimanganese tetraoxide (228.81 g/mol) and barium carbonate (197.34 g/mol) were weighed and mixed so as to have a molar ratio of Mn:Ba = 1.00:0.50 to obtain a mixed raw material, and (ii) the firing temperature for firing the mixed raw material was 1000°C.

Next, a near-infrared transmission material according to Example 7 was obtained in the same manner as in Example 1, except that 7.6 g of the barium manganate particles (BaMnO) according to Example 7, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 80%.

Then, the coating film of the near-infrared transmission material according to Example 7 was formed in the same manner as in Example 1 to obtain a near-infrared transmitting film (film thickness of 5 µm) according to Example 7.

### (Example 8)

A manganese oxide according to Example 8 is yttrium manganate particles (YMO) in which the constituent element A is Y

In the yttrium manganate particles (YMO) according to Example 8, the molar number of the constituent element A (Y) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the yttrium manganate particles (YMO) according to Example 8 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:0.50 to obtain a mixed raw material, (ii) the firing temperature for firing the mixed raw material was 1000°C, and (iii) the pulverization treatment of Example 2 was performed.

Next, a near-infrared transmission material according to Example 8 was obtained in the same manner as in Example 1, except that 7.6 g of the yttrium manganate particles (YMO) according to Example 8, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 80%.

Then, the coating film of the near-infrared transmission material according to Example 8 was formed in the same manner as in Example 1 to obtain a near-infrared transmitting film (film thickness of 5 µm) according to Example 8.

### (Example 9)

A manganese oxide according to Example 9 is bismuth manganate particles (BiMnO) in which the constituent element A is Bi.

In the bismuth manganate particles (BiMnO) according to Example 9, the molar number of the constituent element A (Ba) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the bismuth manganate particles (BiMnO) according to Example 9 were obtained in the same manner as in Example 1, except that (i) trimanganese tetraoxide (228.81 g/mol) and basic bismuth carbonate (509.97 g/mol) were weighed and mixed so as to have a molar ratio of Mn:Bi = 1.00:0.50 to obtain a mixed raw material, and (ii) the firing temperature for firing the mixed raw material was 800°C.

Next, a near-infrared transmission material according to Example 9 was obtained in the same manner as in Example 1, except that 7.6 g of the bismuth manganate particles (BiMnO) according to Example 9, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 80%.

Then, the coating film of the near-infrared transmission material according to Example 9 was formed in the same manner as in Example 1 to obtain a near-infrared transmission film (film thickness of 5 µm) according to Example 9.

### (Example 10)

A manganese oxide according to Example 10 is yttrium manganate particles (YMnO) in which the constituent element A is Y

In the yttrium manganate particles (YMO) according to Example 10, the molar number of the constituent element A (Y) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.0.

Specifically, the yttrium manganate particles (YM) according to Example 10 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:1.00 to obtain a mixed raw material, (ii) the firing temperature for firing the mixed raw material was 1200°C, and (iii) the pulverization treatment of Example 2 was performed.

Next, a near-infrared transmission material according to Example 10 was obtained in the same manner as in Example 1, except that 7.6 g of the yttrium manganate particles (YMnO) according to Example 10, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 10 was formed in the same manner as in Example 1 to obtain a near-infrared transmission film (film thickness of 5 µm) according to Example 10.

### (Example 11)

A manganese oxide according to Example 11 is lanthanum manganate particles (LaMnO) in which the constituent element A is La.

In the lanthanum manganate particles (LaMnO) according to Example 11, the molar number of the constituent element A (La) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.0.

Specifically, the lanthanum manganate particles (LaMnO) according to Example 11 were obtained in the same manner as in Example 1, except that (i) trimanganese tetraoxide (228.81 g/mol) and lanthanum carbonate (457.84 g/mol) were weighed and mixed so as to have a molar ratio of Mn:La = 1.00:1.00 to obtain a mixed raw material, (ii) the firing temperature for firing the mixed raw material was 1200°C, and (iii) the pulverization treatment of Example 2 was performed.

Next, a near-infrared transmission material according to Example 11 was obtained in the same manner as in Example 1, except that 7.6 g of the lanthanum manganate particles (LaMnO) according to Example 11, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 11 was formed in the same manner as in Example 1 to obtain a near-infrared transmission film (film thickness of 5 µm) according to Example 11.

### (Example 12)

A manganese oxide according to Example 12 is praseodymium manganate particles (PrMnO) in which the constituent element A is Pr.

In the praseodymium manganate particles (PrMnO) according to Example 12, the molar number of the constituent element A (Pr) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.0.

Specifically, the praseodymium manganate particles (PrMnO) according to Example 12 were obtained in the same manner as in Example 1, except that (i) trimanganese tetraoxide (228.81 g/mol) and praseodymium oxide (1021.44 g/mol) were weighed and mixed so as to have a molar ratio of Mn:Pr = 1.00:1.00 to obtain a mixed raw material, (ii) the firing temperature for firing the mixed raw material was 1200°C, and (iii) the pulverization treatment of Example 2 was performed.

Next, a near-infrared transmission material according to Example 12 was obtained in the same manner as in Example 1, except that 7.6 g of the praseodymium manganate particles (PrMnO) according to Example 12, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 12 was formed in the same manner as in Example 1 to obtain a near-infrared transmission film (film thickness of 5 µm) according to Example 12.

### (Example 13)

A manganese oxide according to Example 13 is neodymium manganate particles (NdMnO) in which the constituent element A is Nd.

In the neodymium manganate particles (NdMnO) according to Example 13, the molar number of the constituent element A (Nd) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.0.

Specifically, the neodymium manganate particles (NdMnO) according to Example 13 were obtained in the same manner as in Example 1, except that (i) trimanganese tetraoxide (228.81 g/mol) and neodymium carbonate octahydrate (612.62 g/mol) were weighed and mixed so as to have a molar ratio of Mn:Nd = 1.00:1.00 to obtain a mixed raw material, (ii) the firing temperature for firing the mixed raw material was 1200°C, and (iii) the pulverization treatment of Example 2 was performed.

Next, a near-infrared transmission material according to Example 13 was obtained in the same manner as in Example 1, except that 7.6 g of the neodymium manganate particles (NdMnO) according to Example 13, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 13 was formed in the same manner as in Example 1 to obtain a near-infrared transmission film (film thickness of 5 µm) according to Example 13.

### (Example 14)

A manganese oxide according to Example 14 is iron manganate particles (FeMnO) in which the constituent element A is Fe.

In the iron manganate particles (FeMnO) according to Example 14, the molar number of the constituent element A (Fe) was 2 mol, the molar number of Mn was 1 mol, the molar number of A + Mn was 3 mol, the molar ratio of A/(A + Mn) was 0.7, the molar ratio of Mn/(A + Mn) was 0.3, and the molar ratio of A/Mn was 2.0.

Specifically, the iron manganate particles (FeMnO) according to Example 14 were obtained in the same manner as in Example 1, except that (i) trimanganese tetraoxide (228.81 g/mol) and iron oxide (III) (159.69 g/mol) were weighed and mixed so as to have a molar ratio of Mn:Fe = 0.50:1.00 to obtain a mixed raw material, (ii) the firing temperature for firing the mixed raw material was 1200°C, and (iii) the pulverization treatment of Example 2 was performed.

Next, a near-infrared transmission material according to Example 14 was obtained in the same manner as in Example 1, except that 7.6 g of the iron manganate particles (FeMnO) according to Example 14, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 14 was formed in the same manner as in Example 1 to obtain a near-infrared transmission film (film thickness of 5 µm) according to Example 14.

### (Example 15)

A manganese oxide according to Example 15 is lithium manganate particles (LMO) in which the constituent element A is Li.

In the lithium manganate particles (LMO) according to Example 15, the molar number of the constituent element A (Li) was 0.001 mol, the molar number of Mn was 1 mol, the molar number of A + Mn was 1.001 mol, the molar ratio of A/(A+ Mn) was 0.001, the molar ratio of Mn/(A + Mn) was 0.999, and the molar ratio of A/Mn was 0.001.

Specifically, the lithium manganate particles (LMO) according to Example 15 were obtained in the same manner as in Example 1, except that (i) trimanganese tetraoxide (228.81 g/mol) and lithium carbonate (73.891 g/mol) were weighed and mixed so as to have a molar ratio of Mn:Li = 1.00:0.001 to obtain a mixed raw material, and (ii) the mixed raw material was fired at a firing temperature of 620°C for 24 hours.

Next, a near-infrared transmission material according to Example 15 was obtained in the same manner as in Example 1. Then, the coating film of the near-infrared transmission material according to Example 15 was formed in the same manner as in Example 1 to obtain a near-infrared transmission film (film thickness of 5 µm) according to Example 15.

### (Example 16)

A manganese oxide according to Example 16 is lithium manganate particles (LMO) in which the constituent element A is Li.

In the lithium manganate particles (LMO) according to Example 16, the molar number of the constituent element A (Li) was 0.012 mol, the molar number of Mn was 1 mol, the molar number of A + Mn was 1.012 mol, the molar ratio of A/(A + Mn) was 0.012, the molar ratio of Mn/(A + Mn) was 0.988, and the molar ratio of A/Mn was 0.012.

Specifically, the lithium manganate particles (LMO) according to Example 16 were obtained in the same manner as in Example 1, except that (i) trimanganese tetraoxide (228.81 g/mol) and lithium carbonate (73.891 g/mol) were weighed and mixed so as to have a molar ratio of Mn:Li = 1.00:0.012 to obtain a mixed raw material, and (ii) the mixed raw material was fired at a firing temperature of 620°C for 24 hours.

Next, a near-infrared transmission material according to Example 16 was obtained in the same manner as in Example 1. Then, the coating film of the near-infrared transmission material according to Example 16 was formed in the same manner as in Example 1 to obtain a near-infrared transmission film (film thickness of 5 µm) according to Example 16.

### (Example 17)

A manganese oxide according to Example 17 is lithium manganate particles (LMO) in which the constituent element A is Li.

In the lithium manganate particles (LMO) according to Example 17, the molar number of the constituent element A (Li) was 0.1 mol, the molar number of Mn was 1 mol, the molar number of A + Mn was 1.1 mol, the molar ratio of A/(A + Mn) was 0.09, the molar ratio of Mn/(A + Mn) was 0.91, and the molar ratio of A/Mn was 0.1.

Specifically, the lithium manganate particles (LMO) according to Example 17 were obtained in the same manner as in Example 1, except that (i) trimanganese tetraoxide (228.81 g/mol) and lithium carbonate (73.891 g/mol) were weighed and mixed so as to have a molar ratio of Mn:Li = 1.00:0.10 to obtain a mixed raw material, and (ii) the mixed raw material was fired at a firing temperature of 620°C for 24 hours.

Next, a near-infrared transmission material according to Example 17 was obtained in the same manner as in Example 1. Then, the coating film of the near-infrared transmission material according to Example 17 was formed in the same manner as in Example 1 to obtain a near-infrared transmission film (film thickness of 5 µm) according to Example 17.

### (Example 18)

A manganese oxide according to Example 18 is lithium manganate particles (LMO) in which the constituent element A is Li.

In the lithium manganate particles (LMO) according to Example 18, the molar number of the constituent element A (Li) was 0.5 mol, the molar number of Mn was 1 mol, the molar number of A + Mn was 1.5 mol, the molar ratio of A/(A + Mn) was 0.33, the molar ratio of Mn/(A + Mn) was 0.67, and the molar ratio of A/Mn was 0.5.

Specifically, the lithium manganate particles (LMO) according to Example 18 were obtained in the same manner as in Example 1, except that (i) trimanganese tetraoxide (228.81 g/mol) and lithium carbonate (73.891 g/mol) were weighed and mixed so as to have a molar ratio of Mn:Li = 1.00:0.50 to obtain a mixed raw material, and (ii) the mixed raw material was fired at a firing temperature of 620°C for 24 hours.

Next, a near-infrared transmission material according to Example 18 was obtained in the same manner as in Example 1. Then, the coating film of the near-infrared transmission material according to Example 18 was formed in the same manner as in Example 1 to obtain a near-infrared transmission film (film thickness of 5 µm) according to Example 18.

### (Example 19)

A manganese oxide according to Example 19 is lithium manganate particles (LMO) in which the constituent element A is Li.

In the lithium manganate particles (LMO) according to Example 19, the molar number of the constituent element A (Li) was 1 mol, the molar number of Mn was 1 mol, the molar number of A + Mn was 2 mol, the molar ratio of A/(A + Mn) was 0.50, the molar ratio of Mn/(A + Mn) was 0.50, and the molar ratio of A/Mn was 1.

Specifically, the lithium manganate particles (LMO) according to Example 19 were obtained in the same manner as in Example 1, except that (i) trimanganese tetraoxide (228.81 g/mol) and lithium carbonate (73.891 g/mol) were weighed and mixed so as to have a molar ratio of Mn:Li = 1.00:1.00 to obtain a mixed raw material, and (ii) the mixed raw material was fired at a firing temperature of 620°C for 24 hours.

Next, a near-infrared transmission material according to Example 19 was obtained in the same manner as in Example 1. Then, the coating film of the near-infrared transmission material according to Example 19 was formed in the same manner as in Example 1 to obtain a near-infrared transmission film (film thickness of 5 µm) according to Example 19.

### (Example 20)

A manganese oxide according to Example 20 is lithium manganate particles (LMO) in which the constituent element A is Li.

In the lithium manganate particles (LMO) according to Example 20, the molar number of the constituent element A (Li) was 1.5 mol, the molar number of Mn was 1 mol, the molar number of A + Mn was 2.5 mol, the molar ratio of A/(A + Mn) was 0.60, the molar ratio of Mn/(A + Mn) was 0.40, and the molar ratio of A/Mn was 1.5.

Specifically, the lithium manganate particles (LMO) according to Example 20 were obtained in the same manner as in Example 1, except that (i) trimanganese tetraoxide (228.81 g/mol) and lithium carbonate (73.891 g/mol) were weighed and mixed so as to have a molar ratio of Mn:Li = 1.00:1.50 to obtain a mixed raw material, and (ii) the mixed raw material was fired at a firing temperature of 620°C for 24 hours.

Next, a near-infrared transmission material according to Example 20 was obtained in the same manner as in Example 1. Then, the coating film of the near-infrared transmission material according to Example 20 was formed in the same manner as in Example 1 to obtain a near-infrared transmission film (film thickness of 5 µm) according to Example 20.

### (Example 21)

A manganese oxide according to Example 21 is yttrium manganate particles (YMO) in which the constituent element A is Y.

In the yttrium manganate particles (YMO) according to Example 21, the molar number of the constituent element A (Y) was 0.1 mol, the molar number of Mn was 1 mol, the molar number of A + Mn was 1.1 mol, the molar ratio of A/(A + Mn) was 0.1, the molar ratio of Mn/(A + Mn) was 0.9, and the molar ratio of A/Mn was 0.1.

Specifically, the yttrium manganate particles (YMO) according to Example 21 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:0.10 to obtain a mixed raw material, (ii) the firing temperature for firing the mixed raw material was 1200°C, and (iii) the two stage pulverization treatment of Example 3 was performed.

Next, a near-infrared transmission material according to Example 21 was obtained in the same manner as in Example 1, except that 7.6 g of the yttrium manganate particles (YMO) according to Example 21, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 21 was formed in the same manner as in Example 1 to obtain a near-infrared transmission film (film thickness of 5 µm) according to Example 21.

### (Example 22)

A manganese oxide according to Example 22 is yttrium manganate particles (YMO) in which the constituent element A is Y.

In the yttrium manganate particles (YMO) according to Example 22, the molar number of the constituent element A (Y) was 0.4 mol, the molar number of Mn was 1 mol, the molar number of A + Mn was 1.4 mol, the molar ratio of A/(A + Mn) was 0.3, the molar ratio of Mn/(A + Mn) was 0.7, and the molar ratio of A/Mn was 0.4.

Specifically, the yttrium manganate particles (YMO) according to Example 22 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:0.40 to obtain a mixed raw material, (ii) the firing temperature for firing the mixed raw material was 1200°C, and (iii) the two stage pulverization treatment of Example 3 was performed.

Next, a near-infrared transmission material according to Example 22 was obtained in the same manner as in Example 1, except that 7.6 g of the yttrium manganate particles (YMO) according to Example 22, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 22 was formed in the same manner as in Example 1 to obtain a near-infrared transmission film (film thickness of 5 µm) according to Example 22.

### (Example 23)

A manganese oxide according to Example 23 is yttrium manganate particles (YMO) in which the constituent element A is Y.

In the yttrium manganate particles (YMO) according to Example 23, the molar number of the constituent element A (Y) was 0.5 mol, the molar number of Mn was 1 mol, the molar number of A + Mn was 1.5 mol, the molar ratio of A/(A + Mn) was 0.3, the molar ratio of Mn/(A + Mn) was 0.7, and the molar ratio of A/Mn was 0.5.

Specifically, the yttrium manganate particles (YMO) according to Example 23 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:0.50 to obtain a mixed raw material, (ii) the firing temperature for firing the mixed raw material was 1200°C, and (iii) the two stage pulverization treatment of Example 3 was performed.

Next, a near-infrared transmission material according to Example 23 was obtained in the same manner as in Example 1, except that 7.6 g of the yttrium manganate particles (YMO) according to Example 23, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 23 was formed in the same manner as in Example 1 to obtain a near-infrared transmission film (film thickness of 5 µm) according to Example 23.

### (Example 24)

A manganese oxide according to Example 24 is yttrium manganate particles (YMO) in which the constituent element A is Y.

In the yttrium manganate particles (YMO) according to Example 24, the molar number of the constituent element A (Y) was 0.6 mol, the molar number of Mn was 1 mol, the molar number of A + Mn was 1.6 mol, the molar ratio of A/(A + Mn) was 0.4, the molar ratio of Mn/(A + Mn) was 0.6, and the molar ratio of A/Mn was 0.6.

Specifically, the yttrium manganate particles (YMO) according to Example 24 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:0.60 to obtain a mixed raw material, (ii) the firing temperature for firing the mixed raw material was 1200°C, and (iii) the two stage pulverization treatment of Example 3 was performed.

Next, a near-infrared transmission material according to Example 24 was obtained in the same manner as in Example 1, except that 7.6 g of the yttrium manganate particles (YMO) according to Example 24, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 24 was formed in the same manner as in Example 1 to obtain a near-infrared transmission film (film thickness of 5 µm) according to Example 24.

### (Example 25)

A manganese oxide according to Example 25 is yttrium manganate particles (YMO) in which the constituent element A is Y.

In the yttrium manganate particles (YMO) according to Example 25, the molar number of the constituent element A (Y) was 0.75 mol, the molar number of Mn was 1 mol, the molar number of A + Mn was 1.75 mol, the molar ratio of A/(A + Mn) was 0.43, the molar ratio of Mn/(A + Mn) was 0.57, and the molar ratio of A/Mn was 0.75.

Specifically, the yttrium manganate particles (YMO) according to Example 25 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:0.75 to obtain a mixed raw material, (ii) the firing temperature for firing the mixed raw material was 1200°C, and (iii) the two stage pulverization treatment of Example 3 was performed.

Next, a near-infrared transmission material according to Example 25 was obtained in the same manner as in Example 1, except that 7.6 g of the yttrium manganate particles (YMO) according to Example 25, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 25 was formed in the same manner as in Example 1 to obtain a near-infrared transmission film (film thickness of 5 µm) according to Example 25.

### (Example 26)

A manganese oxide according to Example 26 is yttrium manganate particles (YMO) in which the constituent element A is Y.

In the yttrium manganate particles (YMO) according to Example 26, the molar number of the constituent element A (Y) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.0.

Specifically, the yttrium manganate particles (YMO) according to Example 26 were obtained in the same manner as in Example 1, except that (i) trimanganese tetraoxide (228.81 g/mol) and yttrium oxide (225.81 g/mol) were weighed and mixed so as to have a molar ratio of Mn:Y = 1.00:1.00 to obtain a mixed raw material, (ii) the firing temperature for firing the mixed raw material was 1200°C, and (iii) the two stage pulverization treatment of Example 3 was performed.

Next, a near-infrared transmission material according to Example 26 was obtained in the same manner as in Example 1, except that 7.6 g of the yttrium manganate particles (YMO) according to Example 26, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 26 was formed in the same manner as in Example 1 to obtain a near-infrared transmission film (film thickness of 5 µm) according to Example 26.

### (Example 27)

A manganese oxide according to Example 27 is lithium manganate particles (LMO-Ti) in which the constituent element A is Li and Ti.

In the lithium manganate particles (LMO-Ti) according to Example 27, the molar number of the constituent element A (Li, Ti) was 1.1 mol, the molar number of Mn was 1.9 mol, the molar number of A + Mn was 3 mol, the molar ratio of A/(A + Mn) was 0.4, the molar ratio of Mn/(A + Mn) was 0.6, and the molar ratio of A/Mn was 0.58.

Specifically, the lithium manganate particles (LMO-Ti) according to Example 27 were obtained in the same manner as in Example 1, except that (i) trimanganese tetraoxide (228.81 g/mol), lithium carbonate (73.891 g/mol), and titanium oxide (79.87 g/mol) were weighed and mixed so as to have a molar ratio of Mn:Li:Ti: = 1.90:1.00:0.10 to obtain a mixed raw material, (ii) the firing temperature for firing the mixed raw material was 1000°C, and (iii) the pulverization treatment of Example 2 was performed.

Next, a near-infrared transmission material according to Example 27 was obtained in the same manner as in Example 1. Then, the coating film of the near-infrared transmission material according to Example 27 was formed in the same manner as in Example 1 to obtain a near-infrared transmission film (film thickness of 5 µm) according to Example 27.

### (Example 28)

A manganese oxide according to Example 28 is lithium manganate particles (LMO-Ti) in which the constituent element A is Li and Ti.

In the lithium manganate particles (LMO-Ti) according to Example 28, the molar number of the constituent element A (Li, Ti) was 1.5 mol, the molar number of Mn was 1.5 mol, the molar number of A + Mn was 3 mol, the molar ratio of A/(A + Mn) was 0.5, the molar ratio of Mn/(A + Mn) was 0.5, and the molar ratio of A/Mn was 1.00.

Specifically, the lithium manganate particles (LMO-Ti) according to Example 28 were obtained in the same manner as in Example 1, except that (i) trimanganese tetraoxide (228.81 g/mol), lithium carbonate (73.891 g/mol), and titanium oxide (79.87 g/mol) were weighed and mixed so as to have a molar ratio of Mn:Li:Ti = 1.50:1.00:0.50 to obtain a mixed raw material, (ii) the firing temperature for firing the mixed raw material was 1000°C, and (iii) the pulverization treatment of Example 2 was performed.

Next, a near-infrared transmission material according to Example 28 was obtained in the same manner as in Example 1. Then, the coating film of the near-infrared transmission material according to Example 28 was formed in the same manner as in Example 1 to obtain a near-infrared transmission film (film thickness of 5 µm) according to Example 28.

### (Example 29)

A manganese oxide according to Example 29 is lithium manganate particles (LMO-Y) in which the constituent element A is Li and Y.

In the lithium manganate particles (LMO-Y) according to Example 29, the molar number of the constituent element A (Li, Y) was 1.1 mol, the molar number of Mn was 1.9 mol, the molar number of A + Mn was 3 mol, the molar ratio of A/(A + Mn) was 0.4, the molar ratio of Mn/(A + Mn) was 0.6, and the molar ratio of A/Mn was 0.58.

Specifically, the lithium manganate particles (LMO-Y) according to Example 29 were obtained in the same manner as in Example 1, except that (i) trimanganese tetraoxide (228.81 g/mol), lithium carbonate (73.891 g/mol), and yttrium oxide (225.81 g/mol) were weighed and mixed so as to have a molar ratio of Mn:Li:Y = 1.90:1.00:0.10 to obtain a mixed raw material, (ii) the firing temperature for firing the mixed raw material was 1000°C, and (iii) the pulverization treatment of Example 2 was performed.

Next, a near-infrared transmission material according to Example 29 was obtained in the same manner as in Example 1. Then, the coating film of the near-infrared transmission material according to Example 29 was formed in the same manner as in Example 1 to obtain a near-infrared transmission film (film thickness of 5 µm) according to Example 29.

### (Example 30)

A manganese oxide according to Example 30 is lithium manganate particles (LMO-Y) in which the constituent element A is Li and Y.

In the lithium manganate particles (LMO-Y) according to Example 30, the molar number of the constituent element A (Li, Y) was 0.5 mol, the molar number of Mn was 1.5 mol, the molar number of A + Mn was 3 mol, the molar ratio of A/(A + Mn) was 0.5, the molar ratio of Mn/(A + Mn) was 0.5, and the molar ratio of A/Mn was 1.00.

Specifically, the lithium manganate particles (LMO-Y) according to Example 30 were obtained in the same manner as in Example 1, except that (i) trimanganese tetraoxide (228.81 g/mol), lithium carbonate (73.891 g/mol), and yttrium oxide (225.81 g/mol) were weighed and mixed so as to have a molar ratio of Mn:Li:Y = 1.50:1.00:0.50 to obtain a mixed raw material, (ii) the firing temperature for firing the mixed raw material was 1000°C, and (iii) the pulverization treatment of Example 2 was performed.

Next, a near-infrared transmission material according to Example 30 was obtained in the same manner as in Example 1. Then, the coating film of the near-infrared transmission material according to Example 30 was formed in the same manner as in Example 1 to obtain a near-infrared transmission film (film thickness of 5 µm) according to Example 30.

### (Example 31)

A manganese oxide according to Example 31 is yttrium manganate particles (YMO-Ti) in which the constituent element A is Y and Ti.

In the yttrium manganate particles (YMO-Ti) according to Example 31, the molar number of the constituent element A (Y, Ti) was 1.1 mol, the molar number of Mn was 0.9 mol, the molar number of A + Mn was 2 mol, the molar ratio of A/(A + Mn) was 0.55, the molar ratio of Mn/(A + Mn) was 0.45, and the molar ratio of A/Mn was 1.22.

Specifically, yttrium manganate particles (YMO-Ti) according to Example 31 were obtained in the same manner as in Example 1, except that (i) trimanganese tetraoxide (228.81 g/mol), yttrium oxide (225.81 g/mol): 1 mol, and titanium oxide (79.87 g/mol) were weighed and mixed so as to have a molar ratio of Mn:Y:Ti = 0.90:1.00:0.1 to obtain a mixed raw material, (ii) the firing temperature for firing the mixed raw material was 1200°C, and (iii) the pulverization treatment of Example 2 was performed.

Next, a near-infrared transmission material according to Example 31 was obtained in the same manner as in Example 1, except that 7.6 g of the yttrium manganate particles (YMO-Ti) according to Example 31, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 31 was formed in the same manner as in Example 1 to obtain a near-infrared transmission film (film thickness of 5 µm) according to Example 31.

### (Example 32)

A manganese oxide according to Example 32 is yttrium manganate particles (YMO-Ti) in which the constituent element A is Y and Ti.

In the yttrium manganate particles (YMO-Ti) according to Example 32, the molar number of the constituent element A (Y, Ti) was 1.3 mol, the molar number of Mn was 0.7 mol, the molar number of A + Mn was 2 mol, the molar ratio of A/(A + Mn) was 0.65, the molar ratio of Mn/(A + Mn) was 0.35, and the molar ratio of A/Mn was 1.86.

Specifically, the yttrium manganate particles (YMO-Ti) according to Example 33 were obtained in the same manner as in Example 1, except that (i) trimanganese tetraoxide (228.81 g/mol), lithium carbonate (73.891 g/mol), and yttrium oxide (225.81 g/mol) were weighed and mixed so as to have a molar ratio of Mn:Li:Y = 1.70:1.00:0.30 to obtain a mixed raw material, (ii) the firing temperature for firing the mixed raw material was 1200°C, and (iii) the pulverization treatment of Example 2 was performed.

Next, a near-infrared transmission material according to Example 32 was obtained in the same manner as in Example 1, except that 7.6 g of the yttrium manganate particles (YMO-Ti) according to Example 32, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 32 was formed in the same manner as in Example 1 to obtain a near-infrared transmission film (film thickness of 5 µm) according to Example 32.

### (Example 33)

A manganese oxide according to Example 33 is yttrium manganate particles (YMO-Ti) in which the constituent element A is Y and Ti.

In the yttrium manganate particles (YMO-Ti) according to Example 33, the molar number of the constituent element A (Y, Ti) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, the yttrium manganate particles (YMO-Ti) according to Example 33 were obtained in the same manner as in Example 1, except that (i) trimanganese tetraoxide (228.81 g/mol), lithium carbonate (73.891 g/mol), and yttrium oxide (225.81 g/mol) were weighed and mixed so as to have a molar ratio of Mn:Li:Y = 1.00:0.90:0.10 to obtain a mixed raw material, (ii) the firing temperature for firing the mixed raw material was 1200°C, and (iii) the pulverization treatment of Example 2 was performed.

Next, a near-infrared transmission material according to Example 33 was obtained in the same manner as in Example 1, except that 7.6 g of the yttrium manganate particles (YMO-Ti) according to Example 33, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 33 was formed in the same manner as in Example 1 to obtain a near-infrared transmission film (film thickness of 5 µm) according to Example 33.

### (Example 34)

A manganese oxide according to Example 34 is yttrium manganate particles (YMO-Ti) in which the constituent element A is Y and Ti.

In the yttrium manganate particles (YMO-Ti) according to Example 34, the molar number of the constituent element A (Y, Ti) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, the yttrium manganate particles (YMO-Ti) according to Example 34 were obtained in the same manner as in Example 1, except that (i) trimanganese tetraoxide (228.81 g/mol), lithium carbonate (73.891 g/mol), and yttrium oxide (225.81 g/mol) were weighed and mixed so as to have a molar ratio of Mn:Li:Y = 1.00:0.70:0.30 to obtain a mixed raw material, (ii) the firing temperature for firing the mixed raw material was 1200°C, and (iii) the pulverization treatment of Example 2 was performed.

Next, a near-infrared transmission material according to Example 34 was obtained in the same manner as in Example 1, except that 7.6 g of the yttrium manganate particles (YMO-Ti) according to Example 34, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 34 was formed in the same manner as in Example 1 to obtain a near-infrared transmission film (film thickness of 5 µm) according to Example 34.

### (Example 35)

A manganese oxide according to Example 35 is yttrium manganate particles (YMO-Zn) in which the constituent element A is Y and Zn.

In the yttrium manganate particles (YMO-Zn) according to Example 35, the molar number of the constituent element A (Y, Zn) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, yttrium manganate particles (YMO-Zn) according to Example 35 were obtained in the same manner as in Example 1, except that (i) trimanganese tetraoxide (228.81 g/mol), yttrium oxide (225.81 g/mol), and zinc oxide (81.41 g/mol) were weighed and mixed so as to have a molar ratio of Mn:Y:Zn = 1.00:0.90:0.10 to obtain a mixed raw material, (ii) the firing temperature for firing the mixed raw material was 1200°C, and (iii) the pulverization treatment of Example 2 was performed.

Next, a near-infrared transmission material according to Example 35 was obtained in the same manner as in Example 1, except that 7.6 g of the yttrium manganate particles (YMO-Zn) according to Example 35, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 35 was formed in the same manner as in Example 1 to obtain a near-infrared transmission film (film thickness of 5 µm) according to Example 35.

### (Example 36)

A manganese oxide according to Example 36 is yttrium manganate particles (YMO-Zn) in which the constituent element A is Y and Zn.

In the yttrium manganate particles (YMO-Zn) according to Example 36, the molar number of the constituent element A (Y, Zn) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, yttrium manganate particles (YMO-Zn) according to Example 36 were obtained in the same manner as in Example 1, except that (i) trimanganese tetraoxide (228.81 g/mol), yttrium oxide (225.81 g/mol), and zinc oxide (81.41 g/mol) were weighed and mixed so as to have a molar ratio of Mn:Y:Zn = 1.00:0.90:0.10 to obtain a mixed raw material, (ii) the firing temperature for firing the mixed raw material was 1200°C, and (iii) the two stage pulverization treatment of Example 3 was performed.

Next, a near-infrared transmission material according to Example 36 was obtained in the same manner as in Example 1, except that 7.6 g of the yttrium manganate particles (YMO-Zn) according to Example 36, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 36 was formed in the same manner as in Example 1 to obtain a near-infrared transmission film (film thickness of 5 µm) according to Example 36.

### (Example 37)

A manganese oxide according to Example 37 is yttrium manganate particles (YMO-Zn) in which the constituent element A is Y and Zn.

In the yttrium manganate particles (YMO-Zn) according to Example 37, the molar number of the constituent element A (Y, Zn) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, yttrium manganate particles (YMO-Zn) according to Example 37 were obtained in the same manner as in Example 1, except that (i) trimanganese tetraoxide (228.81 g/mol), yttrium oxide (225.81 g/mol), and zinc oxide (81.41 g/mol) were weighed and mixed so as to have a molar ratio of Mn:Y:Zn = 1.00:0.95:0.05 to obtain a mixed raw material, (ii) the firing temperature for firing the mixed raw material was 1200°C, and (iii) the two stage pulverization treatment of Example 3 was performed.

Next, a near-infrared transmission material according to Example 37 was obtained in the same manner as in Example 1, except that 7.6 g of the yttrium manganate particles (YMO-Zn) according to Example 38, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 37 was formed in the same manner as in Example 1 to obtain a near-infrared transmission film (film thickness of 5 µm) according to Example 37.

### (Example 38)

A manganese oxide according to Example 38 is yttrium manganate particles (YMO-Zn) in which the constituent element A is Y and Zn.

In the yttrium manganate particles (YMO-Zn) according to Example 38, the molar number of the constituent element A (Y, Zn) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, yttrium manganate particles (YMO-Zn) according to Example 38 were obtained in the same manner as in Example 1, except that (i) trimanganese tetraoxide (228.81 g/mol), yttrium oxide (225.81 g/mol), and zinc oxide (81.41 g/mol) were weighed and mixed so as to have a molar ratio of Mn:Y:Zn = 1.00:0.70:0.30 to obtain a mixed raw material, (ii) the firing temperature for firing the mixed raw material was 1200°C, and (iii) the two stage pulverization treatment of Example 3 was performed.

Next, a near-infrared transmission material according to Example 38 was obtained in the same manner as in Example 1, except that 7.6 g of the yttrium manganate particles (YMO-Zn) according to Example 38, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 38 was formed in the same manner as in Example 1 to obtain a near-infrared transmission film (film thickness of 5 µm) according to Example 38.

### (Example 39)

A manganese oxide according to Example 39 is yttrium manganate particles (YMO-CaAlTiFeZnBi) in which the constituent element A is Y, Ca, Al, Ti, Fe, Zn, and Bi.

In the yttrium manganate particles (YMO-CaAlTiFeZnBi) according to Example 39, the molar number of the constituent element A (Y, Ca, Al, Ti, Fe, Zn, Bi) was 1 mol, the molar number of Mn was 1 mol, the molar number of A + Mn was 2 mol, the molar ratio of A/(A + Mn) was 0.5, the molar ratio of Mn/(A + Mn) was 0.5, and the molar ratio of A/Mn was 1.00.

Specifically, yttrium manganate particles (YMO-CaAlTiFeZnBi) according to Example 39 were obtained in the same manner as in Example 1, except that (i) trimanganese tetraoxide (228.81 g/mol), yttrium oxide (225.81 g/mol), calcium carbonate (100.09 g/mol), aluminum hydroxide (78.00 g/mol), titanium oxide (79.87 g/mol), iron oxide (159.69 g/mol), zinc oxide (81.41 g/mol), and basic bismuth carbonate (509.97 g/mol) were weighed and mixed so as to have a molar ratio of Mn:Y:Ca:Al:Ti:Fe:Zn:Bi = 1.00:0.94:0.01:0.01:0.01:0.01:0.01:0.01; (ii) the mixed raw material was fired at a firing temperature of 800°C for 15 hours; and (iii) the pulverization treatment of Example 2 was performed.

Next, a near-infrared transmission material according to Example 39 was obtained in the same manner as in Example 1, except that 7.6 g of the yttrium manganate particles (YMO-CaAlTiFeZnBi) according to Example 39, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 39 was formed in the same manner as in Example 1 to obtain a near-infrared transmission film (film thickness of 5 µm) according to Example 39.

### (Example 40)

A manganese oxide according to Example 40 is lithium manganate particles (LMO-CaAlTiFeZnBi) in which the constituent element A is Li, Ca, Al, Ti, Fe, Zn, and Bi.

In the lithium manganate particles (LMO-CaAlTiFeZnBi) according to Example 40, the molar number of the constituent element A (Li, Ca, Al, Ti, Fe, Zn, Bi) was 1 mol, the molar number of Mn was 2 mol, the molar number of A + Mn was 3 mol, the molar ratio of A/(A + Mn) was 0.33, the molar ratio of Mn/(A + Mn) was 0.67, and the molar ratio of A/Mn was 0.5.

Specifically, the lithium manganate particles (LMO-CaAlTiFeZnBi) according to Example 40 were obtained in the same manner as in Example 1, except that (i) trimanganese tetraoxide (228.81 g/mol), lithium carbonate (73.891 g/mol), calcium carbonate (100.09 g/mol), aluminum hydroxide (78.00 g/mol), titanium oxide (79.87 g/mol), iron oxide (159.69 g/mol), zinc oxide (81.41 g/mol), and basic bismuth carbonate (509.97 g/mol) were weighed and mixed so as to have a molar ratio of Mn:Li:Ca:Al:Ti:Fe:Zn:Bi = 1.00:0.94:0.01:0.01:0.01:0.01:0.01:0.01; (ii) the mixed raw material was fired at a firing temperature of 800°C for 15 hours; and (iii) the pulverization treatment of Example 2 was performed.

Next, a near-infrared transmission material according to Example 40 was obtained in the same manner as in Example 1, except that 7.6 g of the lithium manganate particles (LMO-CaAlTiFeZnBi) according to Example 40, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 40 was formed in the same manner as in Example 1 to obtain a near-infrared transmission film (film thickness of 5 µm) according to Example 40.

### (Example 41)

A manganese oxide according to Example 41 is lithium-yttrium manganate particles (LYMO-CaAlTiFeZnBi) in which the constituent element A is Li, Y, Ca, Al, Ti, Fe, Zn, and Bi.

In the lithium-yttrium manganate particles (LYMO-CaAlTiFeZnBi) according to Example 41, the molar number of the constituent element A (Li, Y, Ca, Al, Ti, Fe, Zn, Bi) was 1.06 mol, the molar number of Mn was 0.94 mol, the molar number of A + Mn was 2 mol, the molar ratio of A/(A + Mn) was 0.53, the molar ratio of Mn/(A + Mn) was 0.47, and the molar ratio of A/Mn was 1.13.

Specifically, the lithium-yttrium manganate particles (LYMO-CaAlTiFeZnBi) according to Example 41 were obtained in the same manner as in Example 1, except that (i) trimanganese tetraoxide (228.81 g/mol), lithium carbonate (73.891 g/mol), yttrium oxide (225.81 g/mol), calcium carbonate (100.09 g/mol), aluminum hydroxide (78.00 g/mol), titanium oxide (79.87 g/mol), iron oxide (159.69 g/mol), zinc oxide (81.41 g/mol), and basic bismuth carbonate (509.97 g/mol) were weighed and mixed so as to have a molar ratio of Mn:Li:Y:Ca:Al:Ti:Fe:Zn:Bi = 0.94:0.50:0.50:0.01:0.01:0.01:0.01:0.01:0.01; (ii) the mixed raw material was fired at a firing temperature of 800°C for 15 hours; and (iii) the pulverization treatment of Example 2 was performed.

Next, a near-infrared transmission material according to Example 41 was obtained in the same manner as in Example 1, except that 7.6 g of the lithium-yttrium manganate particles (LYMO-CaAlTiFeZnBi) according to Example 41, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the near-infrared transmission material according to Example 41 was formed in the same manner as in Example 1 to obtain a near-infrared transmission film (film thickness of 5 µm) according to Example 41.

### (Comparative Example 1)

In Comparative Example 1, a transparent resin (acrylic polyol; 100 parts by mass) and a curing agent (hexamethylene diisocyanate; 20 parts by mass) were blended with an aggregate (7 parts by mass) of titanium oxide having a primary particle diameter of 35 nm and a secondary particle diameter of 140 nm, and melt-mixed to obtain a titanium oxide mixture according to Comparative Example 1.

### (Comparative Example 2)

In Comparative Example 2, carbon black which is a single black pigment having a primary particle diameter of 15 nm and a BET specific surface area of 120 m²/g was used. Specifically, a transparent resin (methyl methacrylate/methacrylic acid copolymer; 100 parts by mass) and PGMEA (120 parts by mass) were blended and kneaded with respect to an aggregate (20 parts by mass) of the carbon black by a three roll mill, thereby obtaining a carbon black mixture according to Comparative Example 2.

### (Comparative Example 3)

Comparative Example 3 is a manganese oxide mixture composed of only trimanganese tetraoxide.

In the manganic acid particles according to Comparative Example 3, the molar number of Mn was 1 mol, the molar number of A + Mn was 1 mol, the molar ratio of A/(A + Mn) was 0.0, the molar ratio of Mn/(A + Mn) was 1.0, and the molar ratio of A/Mn was 0.0.

Specifically, the manganic acid particles according to Comparative Example 3 were obtained in the same manner as in Example 1, except that (i) the raw material was composed only of trimanganese tetraoxide (228.81 g/mol), (ii) the firing temperature for firing the raw material was 1200°C, and (iii) the two stage pulverization treatment of Example 3 was performed.

Next, a manganese oxide mixture according to Comparative Example 3 was obtained in the same manner as in Example 1, except that 7.6 g of the manganic acid particles according to Comparative Example 3, 11.1 g of an acrylic resin (DIANAL LR167, manufactured by Mitsubishi Chemical Corporation), and 18.9 g of ethyl acetate were mixed in a container so that the solid content conversion pigment concentration (PWC) was 60%.

Then, the coating film of the manganese oxide mixture according to Comparative Example 3 was formed in the same manner as in Example 1 to obtain a manganese oxide mixture film (film thickness of 5 µm) according to Comparative Example 3.

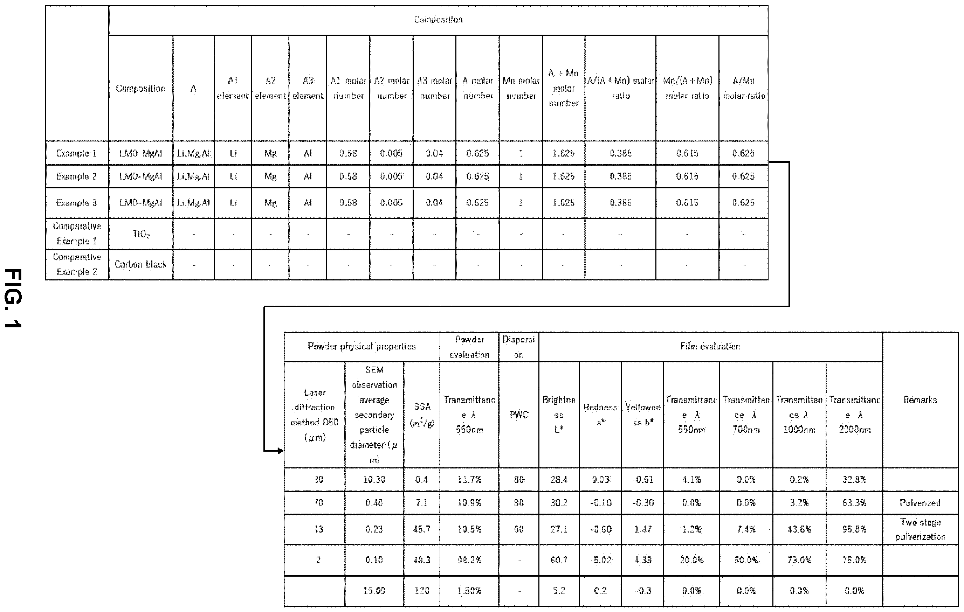

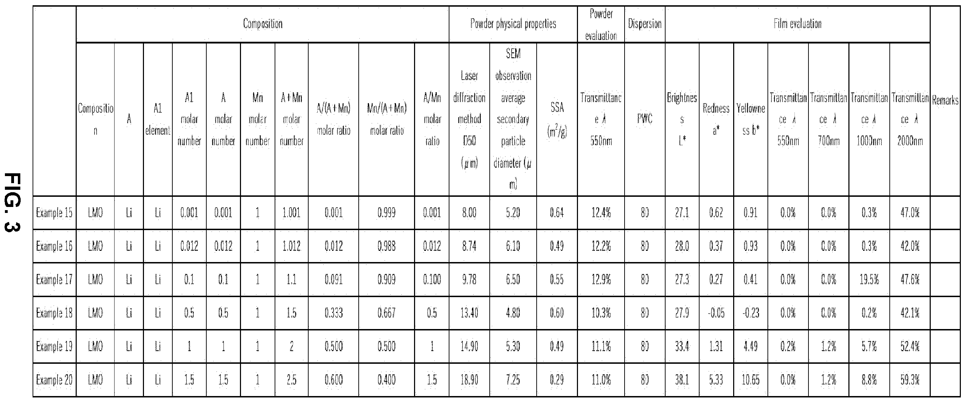

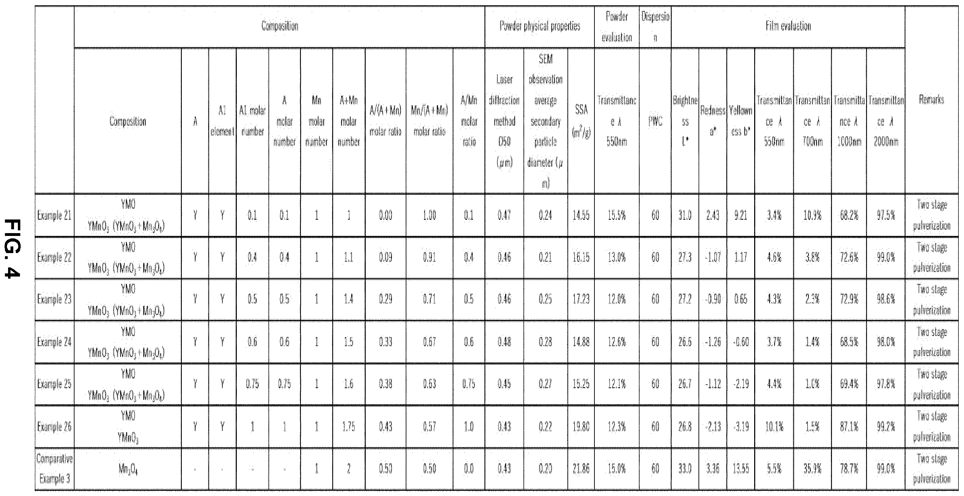

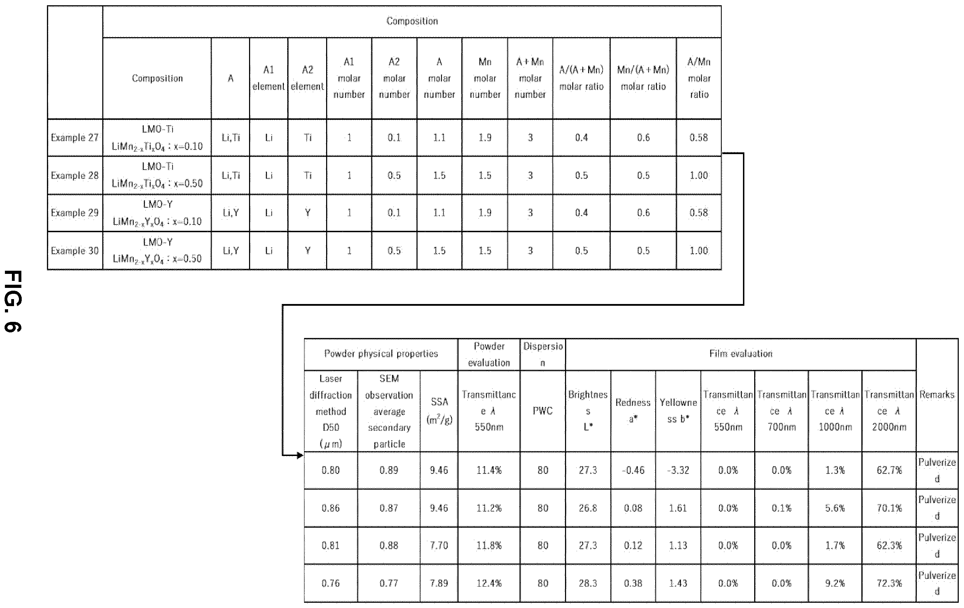

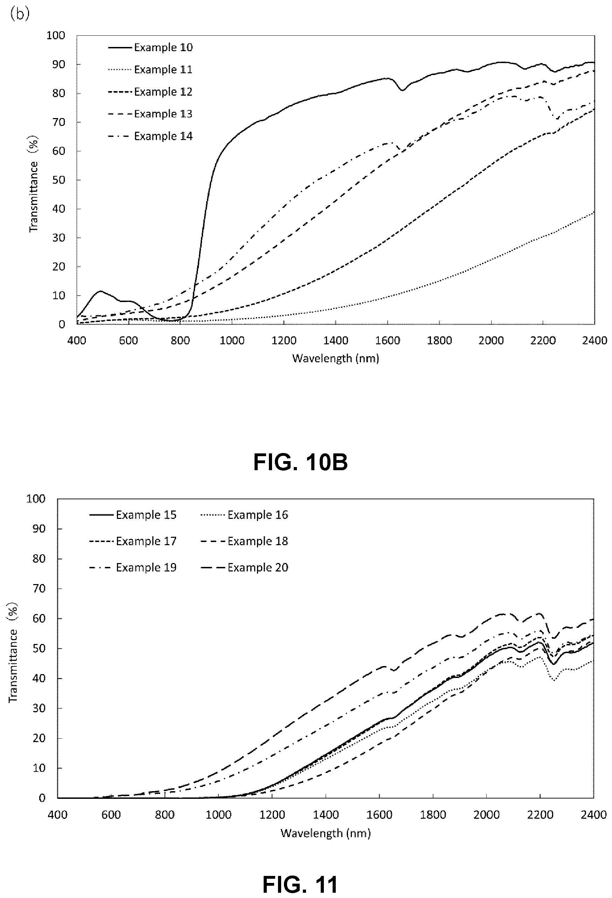

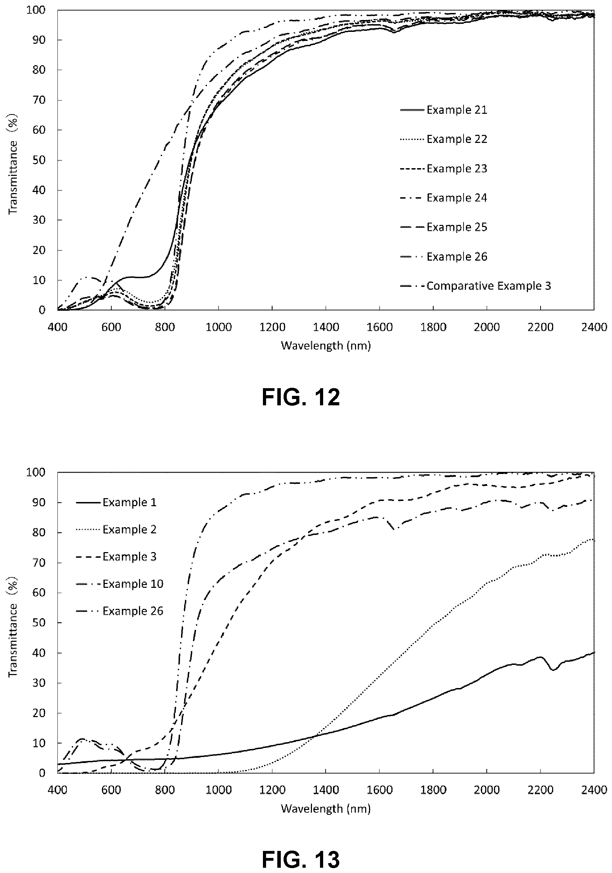

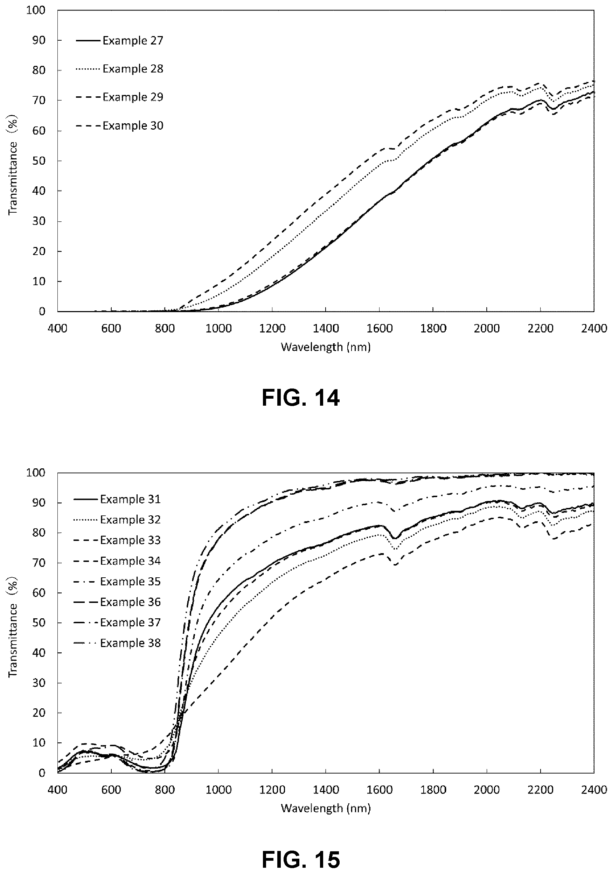

Then, the following physical properties were measured for the near-infrared transmission materials according to Examples 1 to 41, the titanium oxide mixture according to Comparative Example 1, the carbon black mixture according to Comparative Example 2, and the manganese oxide mixture according to Comparative Example 3. The measured physical property values and methods for measuring the physical property values are shown below, and the measurement results are shown in FIGS. 1 to 16.

### <Elemental Analysis>

The composition (atomic ratio) of the sample was analyzed using ICP-OES (Inductance Coupled Plasma Optical Emission Spectrometry), which is a multi-type ICP emission spectrophotometer. As an ICP-OES apparatus used for the analysis, ICP-OES (700 series) manufactured by Agilent Technologies Inc. was used.

### (Laser Diffraction/Scattering Method)

The evaluation of the particle size distribution of the particles was performed by a laser diffraction/scattering method in accordance with JIS Z 8825:2013 using a laser diffraction/scattering particle size distribution measuring apparatus (manufactured by MicrotracBEL Corp.: MT3300EXII). In addition, no filtering was performed, and the sample was subjected to ultrasonic treatment at an ultrasonic power of 40 W for 3 minutes, and then measured. Here, in the near-infrared transmission materials according to Examples 1 to 41, the manganese oxide particles, which are near-infrared transmission material particles, and the dispersion are mixed, and the particle size distribution cannot be evaluated as it is; therefore, the particle size distribution was evaluated using the manganese oxide particles before being mixed with the dispersion. Here, D50 indicates the particle diameter reaching 50% in terms of volume fraction.

Specifically, a slurry-like sample was put into a sample inlet port of a sample circulator provided in the measuring apparatus until the measuring apparatus determined that it was within a measurable range, and then ultrasonic dispersion treatment (ultrasonic output of 40 W, for 3 minutes) built in the measuring apparatus was performed, and after it was confirmed that the display was stable, measurement was performed. On the other hand, the titanium oxide mixture according to Comparative Example 1, the carbon black mixture according to Comparative Example 2, and the manganese oxide mixture according to Comparative Example 3 were also measured in the same manner.

### <Particle Diameter Measurement>

The average value of the secondary particle diameter of the manganese oxide particles contained in the near-infrared transmission materials according to Examples 1 to 41 was calculated by analyzing an image of the particles taken by a field emission scanning electron microscope (FE-SEM) (S-4800, manufactured by Hitachi High-Tech Science Corporation).

Specifically, the horizontal Feret's diameter of 20 secondary particles was measured, and the number average value thereof was used as the average value of the secondary particle diameter. Since the near-infrared transmission materials according to Examples 1 to 41 were obtained by mixing manganese oxide particles, which are particles for a near-infrared transmission material, and a dispersion, the manganese oxide particles before being mixed with the dispersion were observed by SEM under the condition of an acceleration voltage of 1 kV and were directly measured by using FE-SEM. On the other hand, the titanium oxide mixture according to Comparative Example 1, the carbon black mixture according to Comparative Example 2, and the manganese oxide mixture according to Comparative Example 3 were also measured in the same manner.

### <Specific Surface Area (SSA)>

The specific surface area (SSA) was measured using "Macsorb (HM model-1201)" manufactured by Mountech Co., Ltd. in accordance with "6.2 flow method, (3.5) single-point method" of JIS R 1626-1996 (Measuring methods for the specific surface area of fine ceramic powders by gas adsorption using the BET method). At this time, a mixed gas of helium as a carrier gas and nitrogen as an adsorbate gas was used. For calibration, nitrogen gas was used. Here, in the near-infrared transmission materials according to Examples 1 to 41, the manganese oxide particles, which are near-infrared transmission material particles, and the dispersion are mixed, and the specific surface area (SSA) cannot be measured as it is, so the specific surface area (SSA) was measured using the manganese oxide particles before being mixed with the dispersion. On the other hand, the titanium oxide mixture according to Comparative Example 1, the carbon black mixture according to Comparative Example 2, and the manganese oxide mixture according to Comparative Example 3 were also measured in the same manner.

### <Reflectance Measurement>

The reflectance of each sample filled with the manganese oxide particles contained in the near-infrared transmission materials according to Examples 1 to 41, the titanium oxide mixture according to Comparative Example 1, the carbon black mixture according to Comparative Example 2, and the manganese oxide mixture according to Comparative Example 3 was measured at a wavelength of 550 nm using a spectrophotometer equipped with a 60 mmϕ integrating sphere unit (UV-visible near-infrared spectrophotometer Model UH4150, manufactured by Hitachi High-Tech Science Corporation). Here, in the near-infrared transmission materials according to Examples 1 to 41, the manganese oxide particles, which are near-infrared transmission material particles, and the dispersion are mixed, and the reflectance cannot be measured as it is, so the reflectance was measured using the manganese oxide particles before being mixed with the dispersion. On the other hand, the titanium oxide mixture according to Comparative Example 1, the carbon black mixture according to Comparative Example 2, and the manganese oxide mixture according to Comparative Example 3 were also measured in the same manner.

### <L*a*b* Measurement>

As described above, the values of L*, a*, and b* in the CIE1976 (L*a*b*) color space were determined in accordance with JIS Z 8722:2009 by using a color difference meter (CR-300, manufactured by Konica Minolta, Inc.) for coating film samples having a film thickness of 5 µm in Examples 1 and 3 to 41 and a film thickness of 9 µm in Example 2, which were formed by coating each of the near-infrared transmission materials according to Examples 1 to 41 on a PET film ("Lumirror (registered trademark)": #100-T60, manufactured by Toray Industries, Inc.) using a bar coater (No. 10). Note that the value of L* indicates brightness, and the value of a* (a positive value is closer to red and a negative value is closer to green) and the value of b* (a positive value is closer to yellow and a negative value is closer to blue) indicate chromaticity. On the other hand, the titanium oxide mixture according to Comparative Example 1, the carbon black mixture according to Comparative Example 2, and the manganese oxide mixture according to Comparative Example 3 were also subjected to the measurement by preparing coating film samples in the same manner.

### <Transmittance Measurement>

The near-infrared transmission materials according to Examples 1 to 41 were coated on a PET film ("Lumirror (registered trademark)": #100-T60 manufactured by Toray Industries, Inc.), and the transmittances of the produced near-infrared transmission films (samples) according to Examples 1 to 41 were measured with a spectrophotometer under the following transmittance measurement conditions. Additionally, the transmittances of the titanium oxide mixture film (sample) according to Comparative Example 1 produced by coating the titanium oxide mixture according to Comparative Example 1 onto the PET film, the carbon black film (sample) according to Comparative Example 2 produced by coating the carbon black mixture according to Comparative Example 2 onto the PET film, and the manganese oxide mixture film (sample) according to Comparative Example 3 produced by coating the manganese oxide mixture according to Comparative Example 3 onto the PET film were also measured with a spectrophotometer under the following transmittance measurement conditions.

### <<Transmittance Measurement Conditions>>

·Measurement apparatus: UV-visible near-infrared spectrophotometer Model UH4150 (manufactured by Hitachi High-Tech Science Corporation)
Measurement mode: wavelength scan
Data mode: %T (transmission)
Measurement wavelength range: 400 to 2400 nm
Scanning speed: 600 nm/min·Sampling interval: 2 nm

Based on the above transmittance measurement conditions, the transmittances at the wavelengths of 500 nm and 700 nm, and the transmittances at the wavelengths of 1000 nm and 2000 nm were calculated from the measured transmittances.

As shown in FIGS. 1 to 8, in the manganese oxides, the manganese oxide particles, and the near-infrared transmission materials according to Examples 1 to 41, when the constituent elements are represented by A-Mn-O, and the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I, the visible light rays were not transmitted as much as possible, and the near-infrared rays could be transmitted.

In addition, since the manganese oxides, the manganese oxide particles, and the near-infrared transmission materials according to Examples 1 to 41 had a reflectance of light at a wavelength of 550 nm of 20% or less, the visible light rays were not transmitted as much as possible, and the near-infrared rays could be transmitted.

Furthermore, when the composition formula of the manganese oxides and the manganese oxide particles according to Examples 1 to 41 was represented by AxMnyOz, and x/y was 0.001 or more and 2.00 or less, the transmissivity was gently improved from the vicinity of a wavelength of 1000 nm, and high transmissivity was exhibited in a long-wavelength region of a wavelength of 2000 nm.

As shown in FIGS. 1, 3, 5, and 8, in the manganese oxides and the manganese oxide particles according to Examples 1 to 3, 15 to 20, 27 to 30, 40, and 41, in a case where the constituent element A contained Li, the transmittance in the visible light region was low and the transmittance in the near-infrared region was high. In addition, in a case where the composition formula of the manganese oxides and the manganese oxide particles according to Examples 1 to 3, 15 to 20, 27 to 30, 40, and 41 was represented by AxMnyOz, when x/y was 0.001 or more and 2.00 or less, the transmissivity was gently improved from the vicinity of a wavelength of 1000 nm, and high transmissivity was exhibited in a long-wavelength region in the vicinity of a wavelength of 2000 nm.

As shown in FIGS. 1, 5, 6, and 8, in the manganese oxides and the manganese oxide particles according to Examples 1 to 3, 27 to 30, 40, and 41, even when the constituent element A contained Li and one or more elements selected from Mg, Ca, Al, Ti, Fe, Zn, Bi, and Y, the transmittance in the visible light region was low and the transmittance in the near-infrared region was high.

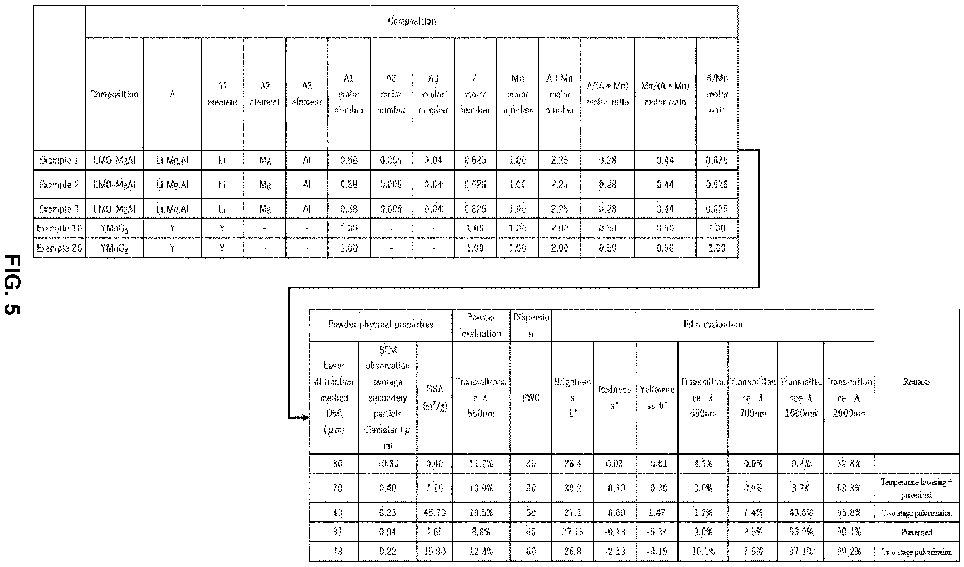

As shown in FIGS. 1 and 5, in the manganese oxides and the manganese oxide particles according to Examples 1 to 3, when the constituent element A contained Li, and Mg and/or Al, the transmittance in the near-infrared region was further improved.

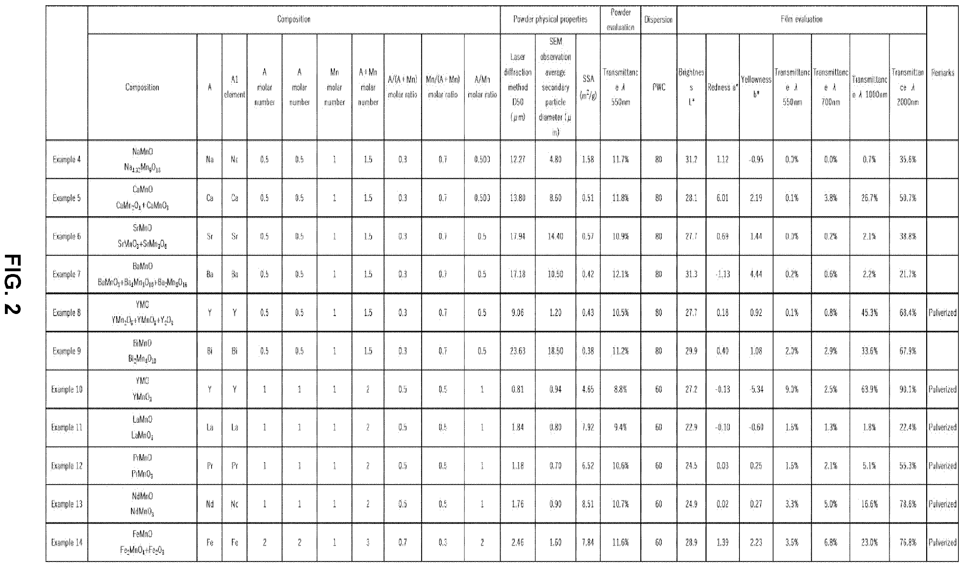

As shown in FIGS. 2, 4, 5, 7, and 8, in the manganese oxides and the manganese oxide particles according to Examples 10, 21 to 26, 31 to 39, and 41, when the constituent element A contained Y, the transmittance has risen steeply from a low wavelength side in the vicinity of a wavelength of 1000 nm, and thereafter, high transmissivity was exhibited. In addition, in a case where the composition formula of the manganese oxides and the manganese oxide particles according to Examples 10, 21 to 26, 31 to 39, and 41 was represented by AxMnyOz, when x/y was 0.001 or more and 2.00 or less, transmissivity in the near-infrared region was exhibited while transmission in the visible light region was suppressed. Furthermore, in the XRD spectra of the manganese oxides and the manganese oxide particles according to Examples 10, 22 to 26, 31 to 39, and 41, when the intensity ratio (211)/(112) of the peak intensity derived from the (211) plane appearing at 2θ = 35.5 to 36.5° to the peak intensity derived from the (112) plane appearing at 2θ = 32.5 to 33.5° was 2.50 or less, the blackness was high (a* and b* were close to 0).

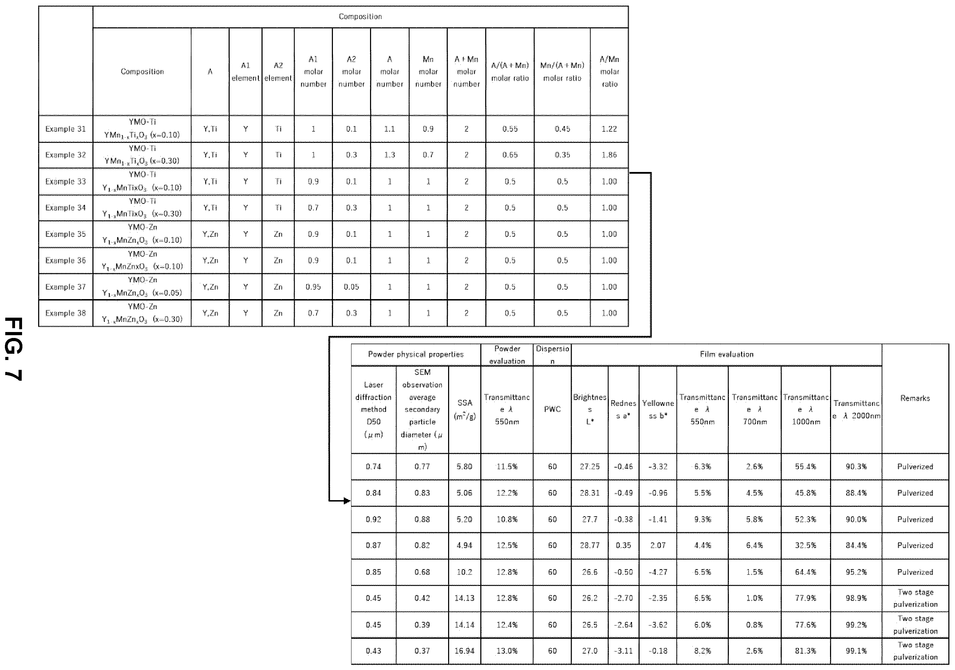

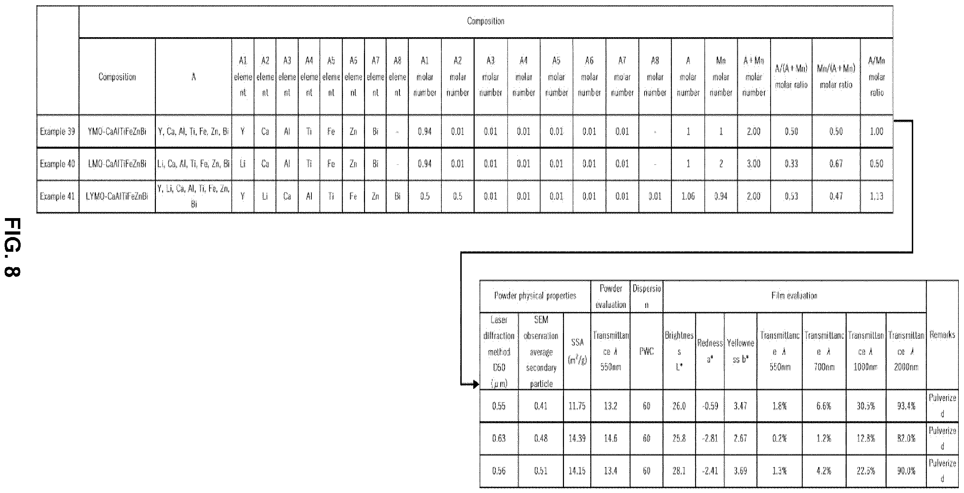

As shown in FIGS. 7 and 8, in the manganese oxides and the manganese oxide particles according to Examples 31 to 39 and 41, in a case where the constituent element A contained Y and one or more elements selected from Li, Ca, Al, Ti, Fe, Zn, and Bi, the transmittance has risen steeply from a low wavelength side in the vicinity of a wavelength of 1000 nm, and thereafter high transmissivity was exhibited.

As shown in FIG. 7, in the manganese oxides and the manganese oxide particles according to Examples 35 to 38, when the constituent element A contained Y and Zn, the transmissivity in the near-infrared region was further increased.

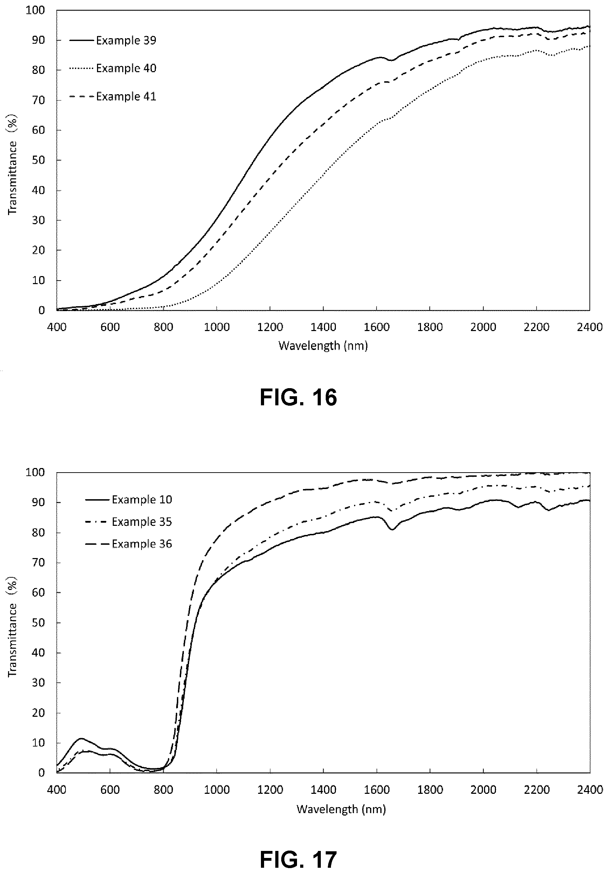

When the near-infrared transmission material (YMnOs) according to Example 10 shown in FIG. 2 is compared with the near-infrared transmission material (Y_{1-X}MnZn_{X}O₃: X = 0.10) according to Example 35 shown in FIG. 7, the transmittance in the near-infrared region is improved by adding Zn (refer to FIG. 17). This is presumably because the valence of Mn and the amount of oxygen deficiency are changed by substituting a part of Y³⁺ sites with Zn²⁺, and the transmissivity in the near-infrared region is improved. In addition, in the near-infrared transmission material according to Example 36 in which the manganese oxide particles contained in the near-infrared transmission material according to Example 35 were subjected to the two stage pulverization treatment, the transmittance in the near-infrared region was further improved (refer to FIG. 17).

As shown in FIGS. 1 to 8, when the average value of the secondary particle diameter of the manganese oxide particles according to Examples 1 to 41 observed by SEM was 10 nm or more and 20 µm or less, the transmittance in the near-infrared region was improved.

In addition, when the specific surface area of the manganese oxide particles according to Examples 1 to 41 as measured by the BET method was 0.20 m²/g or more, the dispersibility of the manganese oxide particles was improved.

Moreover, as shown in FIG. 1, when the average value of the secondary particle diameter of the manganese oxide particles contained in the near-infrared transmission materials according to Examples 1 to 3 obtained by SEM observation or the particle diameter corresponding to 50% of the integrated volume obtained by particle diameter distribution measurement using a laser diffraction/scattering method was small and the specific surface area measured by the BET method was large, the transmittance in the near-infrared region was improved.

When the manganese oxide particles and the near-infrared transmission materials according to Examples 1 to 41 had an L* of 45 or less as measured by CIE1976, the appearance became blacker, and the transmittance in the visible light region could be lowered.

Here, as shown in FIG. 7, the manganese oxide particles contained in the near-infrared transmission material (molar ratio of A/Mn = 1.0) according to Example 26 are a single substance of YMnOs and have a deep blue color. Therefore, by reducing the molar ratio of A/Mn to generate brown Mn₃O₄ which is a complementary color to form a mixture of YMnOs and Mn₃O₄ as in the near-infrared transmission materials according to Examples 23 to 25, it is possible to suppress the transmittance in the visible light region and blacken the near-infrared transmission materials while maintaining the transmittance.

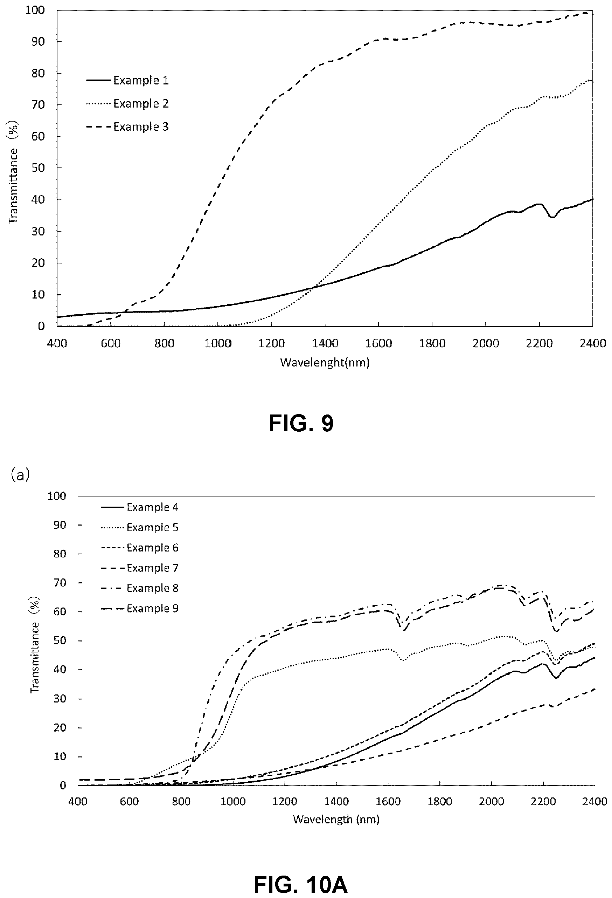

As shown in FIGS. 9 to 16, when the near-infrared transmission materials according to Exmaples 1 to 41 had a transmittance of 30% or less at a wavelength of 700 nm (visible light region) and a transmittance of 10% or more at a wavelength of 2000 nm (near-infrared region), which was larger than the transmittance at a wavelength of 700 nm (visible light region), the near-infrared transmission materials did not transmit visible light rays as much as possible and transmitted near-infrared rays.

In addition, when the near-infrared transmission materials according to Exmaples 3, 5, 8 to 10, 13, 14, 17, 21 to 26, and 31 to 41 had a transmittance of 30% or less at a wavelength of 700 nm (visible light region) and transmittances of 10% or more at a wavelength of 1000 nm and a wavelength of 2000 nm (near-infrared region), which were larger than the transmittance at a wavelength of 700 nm (visible light region), the near-infrared transmission materials did not transmit visible light rays as much as possible and transmitted near-infrared rays.

In addition to the configurations of the respective inventions and embodiments, the inventions disclosed herein include, to the extent applicable, those specified by changing these partial configurations to other configurations disclosed herein, those specified by adding other configurations disclosed herein to these configurations, or those specified by deleting these partial configurations to the extent that partial operations and effects can be obtained and specified as generic concepts.

### Industrial Applicability

The manganese oxide, the manganese oxide particles, the near-infrared transmission material, and the near-infrared transmission film according to the invention have a low transmittance in the visible light region and a high transmittance in the near-infrared region, and thus are suitable for applications such as optical filters of infrared sensors and infrared cameras.

## Claims

1. A manganese oxide represented by A-Mn-O as constituent elements, wherein the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

2. The manganese oxide according to claim 1, wherein a reflectance of light at a wavelength of 550 nm and a reflectance of light at a wavelength of 700 nm of the manganese oxide are 20% or less.

3. The manganese oxide according to claim 1 or 2, wherein a compositional formula of the manganese oxide is represented by AxMnyOz, and x/y = 0.001 or more and 2.00 or less.

4. The manganese oxide according to claim 1 or 2, wherein the constituent element A contains Li.

5. The manganese oxide according to claim 1 or 2, wherein the constituent element A contains Li, a compositional formula of the manganese oxide is represented by AxMnyOz, and x/y = 0.001 or more and 2.00 or less.

6. The manganese oxide according to claim 1 or 2, wherein the constituent element A contains Li and one or more elements selected from Mg, Ca, Al, Ti, Fe, Zn, Bi, and Y.

7. The manganese oxide according to claim 1 or 2, wherein the constituent element A contains Li and Mg and/or Al.

8. The manganese oxide according to claim 1 or 2, wherein the constituent element A contains Y.

9. The manganese oxide according to claim 1 or 2, wherein the constituent element A contains Y, a compositional formula of the manganese oxide is represented by AxMnyOz, and x/y = 0.001 or more and 2.00 or less.

10. The manganese oxide according to claim 1 or 2, wherein the constituent element A contains Y, and an intensity ratio (211)/(112) of a peak intensity derived from a (211) plane appearing at 2θ = 35.5 to 36.5° to a peak intensity derived from a (112) plane appearing at 2θ = 32.5 to 33.5° in an XRD spectrum of the manganese oxide is 2.50 or less.

11. The manganese oxide according to claim 1 or 2, wherein the constituent element A contains Y and one or more elements selected from Li, Ca, Al, Ti, Fe, Zn, and Bi.

12. The manganese oxide according to claim 1 or 2, wherein the constituent element A contains Y and Zn.

13. The manganese oxide according to claim 1 or 2, wherein the manganese oxide is used for a near-infrared transmission material.

14. A manganese oxide particle represented by A-Mn-O as constituent elements, wherein the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

15. The manganese oxide particle according to claim 14, wherein a reflectance of light at a wavelength of 550 nm and a reflectance of light at a wavelength of 700 nm of the manganese oxide particle are 20% or less.

16. The manganese oxide particle according to claim 14 or 15, wherein an average value of a secondary particle diameter of the manganese oxide particle by SEM observation is 10 nm or more and 20 µm or less.

17. The manganese oxide particle according to claim 14 or 15, wherein the manganese oxide particle has a specific surface area measured by a BET method of 0.2 m²/g or more.

18. The manganese oxide particle according to claim 14 or 15, wherein the manganese oxide particle has an L* of 45 or less as measured by CIE1976.

19. The manganese oxide particle according to claim 14 or 15, wherein a compositional formula of the manganese oxide particle is represented by AxMnyOz, and x/y = 0.001 or more and 2.00 or less.

20. The manganese oxide particle according to claim 14 or 15, wherein the constituent element A contains Li.

21. The manganese oxide particle according to claim 14 or 15, wherein the constituent element A contains Li, a compositional formula of the manganese oxide is represented by AxMnyOz, and x/y = 0.001 or more and 2.00 or less.

22. The manganese oxide particle according to claim 14 or 15, wherein the constituent element A contains Li and one or more elements selected from Mg, Ca, Al, Ti, Fe, Zn, Bi, and Y.

23. The manganese oxide particle according to claim 14 or 15, wherein the constituent element A contains Li and Mg and/or Al.

24. The manganese oxide particle according to claim 14 or 15, wherein the constituent element A contains Y.

25. The manganese oxide particle according to claim 14 or 15, wherein the constituent element A contains Y, a compositional formula of the manganese oxide is represented by AxMnyOz, and x/y = 0.001 or more and 2.00 or less.

26. The manganese oxide particle according to claim 14 or 15, wherein the constituent element A contains Y, and an intensity ratio (211)/(112) of a peak intensity derived from a (211) plane appearing at 2θ = 35.5 to 36.5° to a peak intensity derived from a (112) plane appearing at 2θ = 32.5 to 33.5° in an XRD spectrum of the manganese oxide is 2.50 or less.

27. The manganese oxide particle according to claim 14 or 15, wherein the constituent element A contains Y and one or more elements selected from Li, Ca, Al, Ti, Fe, Zn, and Bi.

28. The manganese oxide particle according to claim 14 or 15, wherein the constituent element A contains Y and Zn.

29. The manganese oxide particle according to claim 14 or 15, wherein the manganese oxide particle is used for a near-infrared transmission material.

30. A near-infrared transmission material comprising manganese oxide particles and a dispersion containing a component that transmits near-infrared rays, wherein the manganese oxide is represented by A-Mn-O as constituent elements, and the constituent element A is one or more elements selected from H, an alkali metal, an alkaline-earth metal, a rare earth element, Be, Mg, Ti, Zr, Hf, V, Nb, Ta, Cr, Mo, W, Re, Fe, Ru, Co, Os, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Cl, Br, and I.

31. The near-infrared transmission material according to claim 30, wherein the near-infrared transmission material has an L* of 45 or less as measured by CIE1976.

32. The near-infrared transmission material according to claim 30 or 31, wherein the near-infrared transmission material has a transmittance of 30% or less at a wavelength of 700 nm (visible light region) and a transmittance of 10% or more at a wavelength of 2000 nm (near-infrared region), which is larger than the transmittance at a wavelength of 700 nm (visible light region).

33. The near-infrared transmission material according to claim 30 or 31, wherein the near-infrared transmission material has a transmittance of 30% or less at a wavelength of 700 nm (visible light region), and transmittances of 10% or more at a wavelength of 1000 nm (near-infrared region) and a wavelength of 2000 nm (near-infrared region), which are larger than the transmittance at a wavelength of 700 nm (visible light region).

34. The near-infrared transmission material according to claim 30 or 31, wherein the near-infrared transmission material has reflectances of light at a wavelength of 550 nm and a wavelength of 700 nm of 20% or less.

35. The near-infrared transmission material according to claim 30 or 31, wherein the dispersion is a resin, a glass, an organic solvent, water, or a mixture of two or more thereof.

36. A near-infrared transmission film comprising the near-infrared transmission material according to claim 30 or 31.

37. A near-infrared sensor comprising an optical filter on which the near-infrared transmission film according to claim 36 is formed.

38. A method for producing a near-infrared transmission film, comprising a step of coating the near-infrared transmission material according to claim 30 or 31 onto a base material and drying the coated near-infrared transmission material to form a near-infrared transmission film.
